(19) Europäisches Patentamt
European Patent Office
Office européen des brevets

(11) **EP 3 180 280 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **15750622.1**

(22) Anmeldetag: **06.08.2015**

(51) Int Cl.:
**B65G 47/82** *(2006.01)*

(86) Internationale Anmeldenummer:
**PCT/CH2015/000115**

(87) Internationale Veröffentlichungsnummer:
**WO 2016/023135 (18.02.2016 Gazette 2016/07)**

(54) **VERFAHREN UND VORRICHTUNG ZUM ERFASSEN UND AUSSONDERN VON STÜCKGÜTERN**

METHOD AND APPARATUS FOR GRIPPING AND SEPARATING OUT ARTICLES

PROCÉDÉ ET DISPOSITIF POUR DÉTECTER ET RETIRER DES MARCHANDISES DE DÉTAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2014 CH 12212014**
**09.07.2015 CH 10022015**

(43) Veröffentlichungstag der Anmeldung:
**21.06.2017 Patentblatt 2017/25**

(73) Patentinhaber: **Ferag AG**
**8340 Hinwil (CH)**

(72) Erfinder: **KELLER, Roland**
**8606 Greifensee (CH)**

(74) Vertreter: **Frei Patent Attorneys**
**Frei Patentanwaltsbüro AG**
**Postfach**
**8032 Zürich (CH)**

(56) Entgegenhaltungen:
**WO-A1-99/49277          WO-A1-2005/097638**
**DE-A1-102008 059 433    DE-U1- 29 812 741**

**Beschreibung**

Die Erfindung bezieht sich auf das Gebiet der Fördertechnik. Sie betrifft ein Verfahren zum Erfassen und zum gezielten Aussondern von einzelnen Stückgütern, welche hintereinander auf einem flächigen Förderorgan in einer Förderrichtung gefördert werden. Eine Lagebestimmungseinrichtung erfasst eine Lageinformation des auszusondernden Stückguts. Das auszusondernde Stückgut wird mittels eines Schiebeorgans quer zur Förderrichtung verschoben, indem das Schiebeorgan quer zur Förderrichtung in den Förderbereich der Stückgüter hinein bewegt wird.

Das Schiebeorgan wird insbesondere mit einer Bewegungskomponente senkrecht zur Förderrichtung in den Förderbereich der Stückgüter hinein bewegt.

Ferner betrifft die Erfindung auch eine Vorrichtung zur Ausführung des erfindungsgemässen Verfahrens. Die Vorrichtung umfasst eine Fördereinrichtung mit einem bewegbaren, flächigen Förderorgan, auf welchem Stückgüter einzeln hintereinander in einer Förderrichtung gefördert werden können. Ferner umfasst die Vorrichtung eine Lagebestimmungseinrichtung zum Erfassen einer Lageinformation des auszusondernden Stückguts und eine Schiebeeinrichtung mit einem Schiebeorgan, welches zum Schieben eines einzelnen Stückgutes quer zur Förderrichtung über das Förderorgan in den Förderbereich der Stückgüter hinein bewegbar ist. Im Weiteren umfasst die Vorrichtung eine Steuerungseinrichtung zur Steuerung der Bewegung des Schiebeorgans.

Vorrichtungen der eingangs genannten Art erfüllen die Aufgabe, Stückgüter von einem Ausgangsort an einen Zielort zu fördern. Eine häufig angetroffene Situation in der Fördertechnik betrifft die Förderung von Stückgütern in einem Förderstrom auf einem Förderorgan, wie Förderband, entlang einer gemeinsamen Förderstrecke und das Weiterleiten der Stückgüter an unterschiedliche Zielorte oder an unterschiedliche Förderwege.

So werden beispielsweise Stückgüter in einer Förderanlage aufgrund spezifischer Eigenschaften unterschiedlichen Zielorten zugewiesen. Solche Eigenschaften können beispielsweise das Gewicht, das Format, der Inhalt, die Beschaffenheit, Qualitätsmerkmale oder eine dem Stückgut zugeordnete Zustelladresse sein.

So werden in der Paketsortierung auf einem Förderband geförderte Pakete aufgrund von oben genannten Kriterien sortiert und unterschiedlichen Zielorten in der Förderanlage zugewiesen. Entsprechend werden Einrichtungen benötigt, welche die Pakete aus dem Förderstrom aussondern und an die entsprechenden Zielorte leiten.

Ferner müssen oftmals Stückgüter aus Qualitätsgründen aus einem Förderstrom ausgeschieden und von den anderen Stückgütern getrennt einem separaten Zielort zugeführt werden. Auch in diesen Anwendungen werden Einrichtungen benötigt, mittels welchen die betroffenen Stückgüter aus dem Förderstrom ausgesondert und z.B. als Ausschuss der weiteren Verwertung zugeführt werden können.

Im Weiteren gibt es in der Fördertechnik auch Situationen, in welchen einzelne Stückgüter aus einem Förderstrom ausgesondert werden müssen, weil sie sich nicht an der richtigen Position gemäss einer vorgegebenen Reihenfolge im Förderstrom befinden. Auch in solchen Situationen wird eine Einrichtung benötigt, welche die entsprechenden Stückgüter aus dem Förderstrom aussondert.

Stückguter, welche auf einem flächigen Förderorgan in einer Förderrichtung gefördert werden, können mittels Einrichtungen ausgesondert werden, welche auf unterschiedlichen Funktionsprinzipien basieren.

Die Einrichtungen müssen dafür ausgelegt sein, einzelne Stückgüter aus einem Förderstrom von Stückgütern auszusondern, ohne dass benachbarte Stückgüter, welche nicht ausgesondert werden, beeinflusst werden.

So darf beispielsweise ein Ablenk- oder Schiebeorgan einem an der Einrichtung vorbei bewegten Stückgut den Förderweg nicht versperren.

Gemäss einem ersten, aus dem Stand der Technik bekannten Funktionsprinzip enthält die Einrichtung Ablenkelemente, welche vor dem auszusondernden Stückgut über das Fördererorgan bewegt werden. Das auf das Ablenkelement auftreffende Stückgut wird aufgrund der Barrierewirkung des Ablenkelements aus seiner Förderrichtung abgelenkt und seitlich vom Förderorgan weggeführt.

Eine Einrichtung zum Ablenken von auf einem Förderband geförderten Stückgütern aus der Förderrichtung und zum Aussondern der Stückgüter ist beispielsweise in der Veröffentlichungsschrift WO 2014 110684 A1 beschrieben.

Da die Ablenkelemente vor dem Stückgut über das Förderorgan bewegt werden, eignet sich dieses Funktionsprinzip nur, wenn zwischen den Stückgütern genügend Abstand vorliegt. Zudem verläuft der Vorgang des Aussonderns vergleichsweise langsam, da das Ablenkelement das Stückgut nicht aktiv vom Förderorgan schiebt, sondern dieses lediglich passiv ablenkt. Die Geschwindigkeit des Ablenkvorganges hängt im Wesentlichen von der Fördergeschwindigkeit ab. Selbst wenn das Ablenkorgan noch einen zusätzlichen Antrieb zum seitlichen Wegfördern des Stückgutes enthält, ist der Vorgang vergleichsweise langsam.

Gemäss einem zweiten, aus dem Stand der Technik bekannten Funktionsprinzip enthält die Einrichtung Schiebeorgane, welche von der Seite quer zur Förderrichtung der Stückgüter über das Förderorgan bewegt werden und die Stückgut aktiv seitlich vom Förderorgan schieben. Dieses Funktionsprinzip weist den Vorteil auf, dass das Schiebeorgan nicht zwischen zwei benachbarte Stückgüter bewegt werden muss. Dadurch können die Stückgüter in geringeren Abständen zueinander gefördert werden. Ein weiterer Vorteil liegt darin, dass die Stückgüter durch die aktive Schiebebewegung des Schiebeorgans vergleichsweise schnell vom Förderorgan geschoben werden können. Die Geschwindigkeit des Schiebevorganges hängt somit nicht von der Fördergeschwindigkeit der Stückgüter sondern lediglich von der Geschwindigkeit des Schiebeorgans ab.

Ein Nachteil dieses Funktionsprinzips liegt jedoch darin, dass das aus dem Stillstand über das Förderorgan bewegte Schiebeorgan stark beschleunigt werden muss, damit dieses in möglichst kurzer Zeit aus seiner Ausgangsposition zum Stückgut vorgeschoben wird und dieses möglichst schnell von der Förderfläche schiebt.

Das Schiebeorgan trifft daher mit einer vergleichsweise hohen Geschwindigkeit seitlich auf das wegzuschiebende Stückgut auf. Dabei überträgt das Schiebeorgan einen schlagartigen Bewegungsimpuls auf das Stückgut. Je höher die Geschwindigkeit des Schiebeorgans ist, desto heftiger fällt dieser schlagartig auftreffende Bewegungsimpuls aus.

Der schlagartige Bewegungsimpuls kann nun das Stückgut beschädigen. Daher eignet sich eine solche Einrichtung nicht bei besonders bei empfindlichen Stückgütern.

Die schlagartige Übertragung des Bewegungsimpulses auf das Stückgut beansprucht jedoch auch die Einrichtung und deren Antriebseinheit. Eine robustere und daher teurere Bauweise der Einrichtung sowie ein höherer Wartungsbedarf sind daher die Folge.

Eine Einrichtung zum Wegschieben von auf einem Förderband geförderten Stückgütern aus der Förderrichtung und zum Aussondern der Stückgüter ist beispielsweise in der Veröffentlichungsschrift DE 195 22 217 C2 beschrieben.

Die Veröffentlichungsschrift DE 10 2008 059 433 A1 beschreibt ein Verfahren zum Fördern und Sortieren von Stückgut, mit einer Transportbahn zum Zuführen des Stückguts, einer Erfassungsvorrichtung zum Erfassen ein jedes Stückgut individualisierender Parameter sowie mit mindestens einer Abweisvorrichtung zum Ausschleusen einzelner Stückgüter von der Transportbahn in Abhängigkeit von dem individualisierenden Parameter des betreffenden Stückgutes. Anders gesagt offenbart DE 10 2008 059 433 A1 ein Verfahren zum Erfassen und gezielten Aussondern von einzelnen Stückgütern, welche hintereinander auf einem flächigen Förderorgan in einer Förderrichtung gefördert werden, wobei das auszusondernde Stückgut mittels eines Schiebeorgans quer zur Förderrichtung verschoben wird, indem das Schiebeorgan quer zur Förderrichtung in den Förderbereich der Stückgüter hinein bewegt wird, und wobei mittels einer Lagebestimmungseinrichtung eine Lageinformation zu einem dem Schiebeorgan zugewandten Bereich des auszusondernden Stückgutes ermittelt wird.

Die Veröffentlichungsschrift DE 298 12 741 U1 beschreibt eine Vorrichtung zum Überschieben von einreihig auf einem horizontalen Hauptförderer geförderten Verpackungseinheiten auf ein Förderband zu Verteil- oder Aussortierzwecken. Die Vorrichtung enthält eine über der Fördereinrichtung angeordnete Förderplatte, die durch einen über eine Steuereinrichtung mit Erkennungseinrichtung, einschaltbaren, über der Fördereinrichtung angeordneten Parallelschwenkantrieb zum Überschieben der Verpackungseinheiten aus einer Ausgangsstellung in einer zur Laufrichtung des Hauptförderers parallelen Arbeitsstellung in die Bewegungsbahn der Verpackungseinheiten einschwenkbar ist und die nach dem Überschiebevorgang aus der Bewegungsbahn der Verpackungseinheiten herausschwenkbar ist.

Die Veröffentlichungsschrift WO 99/49277 A1 beschreibt ein Detektionssystem mit optischen Sensoren zur Bestimmung der zwei und dreidimensionalen Geometrie und/oder Position von mit einem Sortierförderer geförderten Objekten.

Die Veröffentlichungsschrift WO 2005/097638 A1 beschreibt eine Übergabevorrichtung zum seitlichen Ausschleusen von Fördergütern aus einer ersten Fördereinrichtung auf eine weitere Fördereinrichtung, mit einer Abschiebeeinheit und zwei sich schräg zur Längsrichtung der ersten Fördereinrichtung im Abstand parallel erstreckenden Zugmitteltrieben, die je ein antreibbares, endloses Zugmittel umfassen und die Abschiebeeinheit an den Zugmitteln befestigte, gegenüberliegend angeordnete Mitnehmer und ein aus einer Ausgangsstellung seitlich neben einem Förderweg in eine Arbeitsstellung in den Förderweg verschiebbares, profilartiges Abschiebeelement aufweist.

Es ist nun eine Aufgabe der vorliegenden Erfindung, eine Einrichtung zum Aussondern von auf einem Förderorgan geförderten Stückgütern mittels eines Schiebeorgans vorzuschlagen, welches die Stückgüter möglichst schonend vom Förderorgan schiebt.

Eine weitere Aufgabe der vorliegenden Erfindung ist es, Stückgüter trotz schonender Behandlung derselbigen durch das Schiebeorgan möglichst schnell und effizient auszusondern.

Eine weitere Aufgabe der vorliegenden Erfindung ist es, den Energieverbrauch der Einrichtung möglichst tief zu halten.

Die Aufgabe wird durch die Merkmale der unabhängigen Ansprüche 1 und 10 gelöst. Vorteilhafte Weiterbildungen und Ausführungsformen der Erfindung ergeben sich aus den abhängigen Ansprüchen, der Beschreibung und den Zeichnungen. Dabei sind Verfahrensmerkmale sinngemäss mit Vorrichtungsmerkmalen kombinierbar und umgekehrt.

Das Verfahren zeichnet sich dadurch aus, dass eine Lagebestimmungseinrichtung eine Lageinformation zu einem dem Schiebeorgan zugewandten Bereich des auszusondernden Stückgutes ermittelt und das Schiebeorgan vor dem Schieben des Stückgutes in eine im Förderbereich über dem Förderorgan liegende Vorschubposition bewegt und das Stückgut durch Beschleunigen des Schiebeorgans aus der Vorschubposition in Schieberichtung durch das Schiebeorgan über das Förderorgan geschoben wird, wobei die Vorschubposition durch eine Steuerungseinrichtung in Abhängigkeit der Lageinformationen des auszusondernden Stückguts auf dem Förderorgan festgelegt wird. Dabei bildet die Lagebestimmungseinrichtung einen ersten und einen zweiten Messstrahlengang aus, wobei orthogonale Projektionen von Geraden, welche durch den ersten und den zweiten Messstrahlengang verlaufen, auf eine Ebene, welche die Förderfläche des Förderorgans umfasst, sich ausserhalb der Förderfläche kreuzen.

Die Vorschubposition liegt, wenn das auszusondernde Stückgut seine Schiebeposition erreicht hat, vom Stückgut aus in Schieberichtung betrachtet, hinter dem Stückgut.

Das Stückgut ist in der Schiebeposition in Förderrichtung betrachtet wenigstens teilweise seitlich vom Schiebeorgan angeordnet.

Das Schiebeorgan wird also quer zur Förderrichtung an den Bewegungsbereich des Stückgutes heran in die Vorschubposition bewegt. Das Schiebeorgan wartet insbesondere in der Vorschubposition auf das entlang des Bewegungsbereichs geförderte Stückgut. Sobald das geförderte Stückgut seine Schiebeposition erreicht hat, wird das Schiebeorgan aus der Vorschubposition in Schieberichtung beschleunigt. Das Schiebeorgan kontaktiert dabei das Stückgut in Förderrichtung betrachtet seitlich.

"Quer zur Förderrichtung" bedeutet in einem Winkel zur Förderrichtung. Dieser Winkel kann insbesondere 90° (Winkelgrade) betragen.

Das Schiebeorgan kann das auszusondernde Stückgut insbesondere vom Förderorgan schieben.

Anders ausgedrückt kann das Schiebeorgan beim gezielten Aussondern des Stückguts das Stückgut über das Förderorgan hinaus schieben.

Die Steuereinrichtung legt die Vorschubposition insbesondere so fest, dass das Schiebeorgan in der Vorschubposition nicht in den Bewegungsbereich des auszusondernden Stückgutes eingreift. D.h., die Vorschubposition liegt ausserhalb des Bewegungsbereichs des auszusondernden Stückgutes.

Der Bewegungsbereich definiert jenen Raum, durch welche das Stückgut auf dem Förderorgan während seiner Förderung in Förderrichtung bewegt wird.

Wäre beispielsweise die Vorschubposition im Bewegungsbereich des Stückgutes, so würde das Stückgut mit seiner Fördergeschwindigkeit auf das Schiebeorgan auflaufen und mit diesem kollidieren.

Der Förderbereich umfasst sämtliche theoretisch möglichen Bewegungsbereiche der auf dem Förderorgan geförderten Stückgüter. Der Förderbereich ist in der Regel einerseits durch den seitlichen Abschluss des Förderorgans und andererseits durch die grösste, zulässige Höhe der Stückgüter begrenzt.

Überdies legt die Steuereinrichtung die Vorschubposition insbesondere so fest, dass das Schiebeorgan in einen freien Förderbereich über dem Förderorgan ausserhalb des Bewegungsbereichs des auszusondernden Stückgutes vorgeschoben wird.

Die Vorschubposition kann in Abhängigkeit von der Lage und der Dimension des auszusondernden Stückgutes für die einzelnen Stückgüter verschieden sein. Die Vorschubposition soll dabei, gegebenenfalls unter Miteinbezug einer Sicherheitstoleranz, möglichst nahe am Bewegungsbereich des auszusondernden Stückguts liegen.

Erreicht nun ein auszusonderndes Stückgut den Wirkbereich des Schieborgans, so wird das Schiebeorgan aus der Vorschubposition in Richtung des auszusondernden Stückgutes beschleunigt. Da die Vorschubposition nahe am Stückgut liegt, trifft das Schiebeorgan mit vergleichsweise geringer Geschwindigkeit auf das Stückgut.

Schiebeorgan und Stückgut werden nun gemeinsam auf eine höhere Schiebegeschwindigkeit beschleunigt. Das Stückgut wird dabei vom Schiebeorgan quer zur Förderrichtung über das Förderorgan geschoben. Das Stückgut weist insbesondere eine Bewegungskomponente senkrecht zur Förderrichtung auf.

Im Gegensatz zu herkömmlichen Einrichtungen, in welchen das Schiebeorgan aus einer Ausgangsposition, welche ausserhalb des Förderorgans liegt, über eine Anlaufstrecke beschleunigt werden muss, bevor dieses mit vergleichsweise hoher Geschwindigkeit auf das Stückgut trifft, ist die Anlaufstrecke des Schiebeorgans aufgrund der Nähe der Vorschubposition zum Bewegungsbereich des auszusondernden Stückgutes klein.

Das auszusondernde Stückgut wird daher sanft bzw. schonend quer zur Förderrichtung angeschoben. D.h. das auszusondernde Stückgut erhält keinen Schlag durch ein bereits über eine vergleichsweise lange Anlaufstrecke stark beschleunigtes Schiebeorgan.

Ferner ist der Schiebevorgang wesentlich schneller, da das Schiebeorgan direkt aus der Vorschubposition heraus das Stückgut anschieben kann. D.h., der Anlaufweg von einer Ausgangsposition ausserhalb des Förderbereichs bis zur Vorschubposition entfällt. Der Vorschub entspricht dabei insbesondere einem Vorhub. Der Schiebehub des Schiebeorgans, mittels welchem das Stückgut auf bzw. von der Förderfläche geschoben wird, ist folglich im Durchschnitt kleiner als bei herkömmlichen Verfahren.

Ein weiterer Vorteil liegt darin, dass das Schiebeorgan geringere Wege zurücklegt, da dieses nach einem Schiebevorgang nicht jedes Mal in die Ausgangsposition ausserhalb des Förderbereichs zurückbewegt werden muss.

Das Schiebeorgan kann vielmehr direkt aus dem Rückhub in die Vorschubposition für das als nächstes auszusondernde Stückgut bewegt werden. Dies trifft insbesondere dann zu, wenn die Vorschubposition für das als nächstes auszusondernde Stückgut sich nicht mit dem Bewegungsbereich von allenfalls vorlaufenden, nicht auszusondernden Stückgütern überschneidet.

Alternativ kann das Schiebeorgan aus dem Rückhub auch in eine Warteposition verschoben werden, welche ausserhalb des Bewegungsbereichs der zwischen zwei auszusondernden Stückgüter angeordneten, nicht auszusondernden Stückgütern liegt.

Die Warteposition wird insbesondere dann eingenommen, wenn die Vorschubposition eines nachfolgenden, auszusondernden Stückgutes im Bewegungsbereich von vorlaufenden, nicht auszusondernden Stückgütern liegt.

Die Warteposition liegt daher von der Vorschubposition aus in Schieberichtung betrachtet hinter der Vorschubposition des als nächsten auszusondernden Stückgutes. Die Warteposition kann jedoch ebenfalls im Förderbereich liegen.

Nachdem die nicht auszusondernden Stückgüter, deren Bewegungsbereich sich mit der Vorschubposition für das nächste auszusondernde Stückgut überschneidet, die Schiebeeinrichtung passiert haben, kann das Schiebeorgan aus der Warteposition in die Vorschubposition für das auszusondernden Stückgut bewegt werden.

Es kann vorgesehen sein, dass das Schiebeorgan grundsätzlich nach jedem Schiebevorgang in eine Warteposition zurückbewegt wird und erst vor oder mit Eintreffen des auszusondernden Stückgutes aus der Warteposition in Schieberichtung in die Vorschubposition bewegt wird.

Der Rückhub des Schiebeorgans ist folglich im Durchschnitt ebenfalls kleiner als bei herkömmlichen Verfahren.

Das Verfahren und die dazugehörige Vorrichtung eignen sich insbesondere zum Aussondern von Stückgütern aus einem Strom von einzeln hintereinander auf einem Förderorgan in einer Förderrichtung geförderten Stückgütern. Die Stückgüter sind insbesondere jeweils voneinander beabstandet. Das Förderorgan bildet insbesondere eine Förderfläche aus, welcher die Stückgüter aufliegen. Die Förderfläche kann z. B. eben sein.

Die Lagebestimmungseinrichtung bildet einen ersten und einen zweiten Messstrahlengang aus. Eine orthogonale Projektion des ersten Messstrahlengangs auf eine Ebene, in welcher die Förderfläche liegt, wird als erste Messstrahlengangprojektion bezeichnet. Analog wird eine orthogonale Projektion des zweiten Messstrahlengangs auf eine Ebene, in welcher die Förderfläche liegt, als zweite Messstrahlengangprojektion bezeichnet.

Mit Messstrahlengang ist ein Strahlengang eines Messstrahls gemeint, also eine Wegstrecke eines Messstrahls. Der Messstrahl kann im Messstrahlgang dabei in eine Richtung verlaufen. Oder der Messstrahl kann im Messstrahlengang in zwei einander entgegen gesetzte Richtungen verlaufen.

Der Messstrahl verläuft über seine gesamte Länge gerade. Somit verläuft der Messstrahlengang auch über seine gesamte Länge gerade.

Mit Messstrahl wird derjenige Teil eines Strahles der Lagebestimmungseinrichtung bezeichnet, dessen Projektion auf eine Ebene, in welcher die Förderfläche liegt, in Förderrichtung des Förderorgans am weitesten stromaufwärts die Förderfläche kreuzt.

Beispielsweise kann eine Lagebestimmungseinrichtung einen ersten und einen zweiten Strahl ausstrahlen, welche ausschliesslich gerade und jeweils immer in dieselbe Richtung verlaufen und die Förderfläche kreuzen. In diesem Fall ist der erste Strahl der erste Messstrahl und der zweite Strahl der zweite Messstrahl.

Als anderes Beispiel kann die Lagebestimmungseinrichtung einen ersten und/oder zweiten Strahl ausstrahlen, welcher eine Abfolge von Geraden mit verschiedenen Richtungen umfasst. Dann weist der Strahl abschnittsweise eine gerade Form auf. Ein solcher Strahl kann beispielsweise V-förmig ausgebildet sein. Ein V-förmig ausgebildeter Strahl kann erzeugt werden, indem ein Strahl an einer Stelle umgelenkt oder anders gesagt reflektiert wird. In einem solchen Fall ist derjenige gerade Abschnitt des Strahls, welcher in orthogonaler Projektion auf die die Förderfläche umfassende Ebene in Förderrichtung am weitesten stromaufwärts angeordnet ist und die Förderfläche kreuzt, der erste bzw. der zweite Messstrahl. Sollte ein Strahl die Förderfläche mehrmals kreuzen und dessen orthogonale Projektionen auf die Förderfläche auf derselben Gerade liegen, dann kann insbesondere jeder gerade Strahl, dessen Projektion die Förderfläche kreuzt, als Messstrahl bezeichnet werden.

Die Lagebestimmungseinrichtung erfasst einen Unterbruch eines Messstrahls in einem Messstrahlengang. Die Lagebestimmungseinrichtung kann unterscheiden, ob der Messstrahl unterbrochen ist, wenn der Messstrahl etwa auf ein Objekt im Messstrahlengang trifft, oder ob der Messstrahl unterbruchsfrei ausgestrahlt ist, beispielsweise wenn der Messstrahlengang frei von einem Objekt ist.

Orthogonale Projektionen sind rechtwinklige Projektionen. Orthogonale Projektionen von Geraden, welche durch den ersten und den zweiten Messstrahlengang verlaufen, auf eine Ebene, welche die Förderfläche des Förderorgans umfasst, kreuzen sich ausserhalb der Förderfläche.

Ein Vorteil der sich ausserhalb der Förderfläche kreuzenden ersten und zweiten Messstrahlenprojektion ist es, dass dies der Steuerungseinrichtung erlaubt, durch Kombination der Signale des ersten und des zweiten Messstrahlengangs eine eindeutige Lageinformation des auszusondernden Stückguts zu ermitteln. Würden sich die erste und die zweite Messstrahlenprojektion innerhalb der Förderfläche kreuzen, dann wäre nicht eindeutig feststellbar, auf welcher Seite des Kreuzungspunktes das auszusondernde Stückgut einen Messstrahlengang passiert und die Auswertung der Messsignale wäre nicht eindeutig.

Diese spezifische Geometrie mit der sich ausserhalb der Förderfläche kreuzenden ersten und zweiten Messstrahlenprojektion erlaubt eine kostengünstige und effiziente Lagebestimmung durch die Lagebestimmungseinrichtung.

Derartige Lagebestimmungseinrichtungen können einfach und kostengünstig hergestellt werden.

Distanzsensoren weisen einen diskreten Messbereich auf, in welchem diese zuverlässige Lageinformationen zu erfassen imstande sind. Zudem sind Distanzsensoren darauf angewiesen, dass das zu erfassende Stückgut bestimmte die Messstrahlen reflektierende Eigenschaften aufweist. Darüber hinaus sind Distanzsensoren teuer.

Im Gegensatz dazu können Lagebestimmungseinrichtungen, welche einen Unterbruch eines Messstrahls erfassen, Lageinformationen zu Stückgütern in beinahe beliebigen Distanzen erfassen. Diese Lagebestimmungseinrichtungen sind robust und funktionieren zuverlässig. Zudem sind diese Lagebestimmungseinrichtungen kostengünstig herzustellen, zu installieren, zu warten und/oder zu reparieren.

Die Erfindung umfasst auch eine Vorrichtung zum Aussondern von Stückgütern gemäss dem oben beschriebenen Verfahren. Die Vorrichtung beinhaltet:

- eine Fördereinrichtung, enthaltend ein bewegbares, flächiges Förderorgan mit einer Förderfläche, auf welchem Stückgüter hintereinander in einer Förderrichtung gefördert werden können,

- eine Schiebeeinrichtung, enthaltend ein Schiebeorgan, welches zum Schieben eines Stückgutes quer zur Förderrichtung über das Förderorgan in den Förderbereich der Stückgüter hinein bewegbar ist

- eine Steuerungseinrichtung zur Steuerung der Bewegung des Schiebeorgans,

- einer Lagebestimmungseinrichtung zur Ermittlung von Lageinformationen zu den Stückgütern auf dem Förderorgan, wobei die Lagebestimmungseinrichtung einen ersten und einen zweiten Messstrahlengang umfasst und eine orthogonale Projektion des ersten Messstrahlengangs und des zweiten Messstrahlengangs auf eine Ebene, in welcher die Förderfläche liegt, als eine erste und eine zweite Messstrahlengangprojektion bezeichnet wird, wobei ein Kreuzungspunkt der ersten Messstrahlengangprojektion und der zweiten Messstrahlengangprojektion ausserhalb der Förderfläche angeordnet ist, und wobei die Steuerungseinrichtung dazu ausgelegt ist, aus den mittels der Lagebestimmungseinrichtung ermittelten Lageinformationen eine Vorschubposition für das Schiebeorgan zu ermitteln und das Schiebeorgan vor dem Schieben des Stückgutes in die ermittelte Vorschubposition zu bewegen.

Die erfindungsgemässe Vorrichtung zeichnet sich dadurch aus, dass diese eine Lagebestimmungseinrichtung zur Ermittlung von Lageinformationen zu den Stückgütern auf dem Förderorgan enthält, und die Steuerungseinrichtung dazu ausgelegt ist, aus den mittels der Lagebestimmungseinrichtung ermittelten Lageinformationen eine Vorschubposition für das Schiebeorgan zu bestimmen und das Schiebeorgan vor dem Schieben des Stückgutes in die Vorschubposition zu bewegen.

Die Lageinformationen zu den Stückgütern umfassen insbesondere Informationen zur Ausrichtung und/oder Position wenigstens eines Bereichs des Stückgutes auf der Förderfläche.

Das Schiebeorgan bildet insbesondere eine Kontakt- bzw. Schiebefläche aus, über welche das auszusondernde Stückgut vom Schiebeorgan kontaktiert wird. Die Schiebefläche kann eben ausgebildet sein. Die Schiebefläche liegt z. B. senkrecht zur Bewegungskomponente des Schiebeorgans, welche senkrecht zur Förderrichtung verläuft. Das Schiebeorgan kann z. B. als Paddel, Brett oder Panel ausgebildet sein.

Die Schiebeeinrichtung enthält insbesondere eine über dem Förderorgan angeordnete Führungsanordnung, in welcher das Schiebeorgan verschiebbar geführt ist. Die Führungsanordnung kann mindestens ein Führungsprofil, wie Führungsschiene, enthalten, an welchem das Schiebeorgan über mindestens ein Führungsglied geführt ist. Das Schiebeorgan ist insbesondere relativ zur Führungsanordnung bzw. zum Führungsprofil verschiebbar. Die Führungsanordnung kann eine Linearführung sein.

Das Schiebeorgan wird insbesondere in einer linearen Bewegung über das Förderorgan bewegt.

Das Schiebeorgan wird zum Schieben des Stückgutes mit einer Bewegungskomponente senkrecht zur Förderrichtung der Stückgüter über das Förderorgan bewegt. Diese Bewegungskomponente definiert den Schiebehub. Das Schiebeorgan kann z. B. zum Schieben des Stückgutes senkrecht zur Förderrichtung der Stückgüter über das Förderorgan bewegt werden.

Das Schiebeorgan kann zum Schieben des Stückgutes zusätzlich mit einer Bewegungskomponente in Förderrichtung über das Förderorgan bewegt werden. Das heisst, das Schiebeorgan wird insbesondere schräg über das Förderorgan bewegt.

Die Bewegungskomponente des Schiebeorgans in Förderrichtung soll der Tatsache Rechnung tragen, dass das Stückgut während des Schiebevorganges durch das Förderorgan weiterhin mit einer Fördergeschwindigkeit in Förderrichtung gefördert wird. Durch eine Bewegungskomponente des Schiebeorgans in Förderrichtung wird eine bessere Führung des Stückgutes während des Schiebevorganges erreicht.

So kann beispielsweise die Geschwindigkeitskomponente des Schiebeorgans in Förderrichtung des Stückgutes der Fördergeschwindigkeit des Förderorgans entsprechen.

Die Schiebeeinrichtung kann nun einen Verstellmechanismus zur Verstellung der Führungsanordnung und somit zur Verstellung des Winkels zwischen dem durch die Führungsanordnung vorgegebenen Bewegungsbereich des Schiebeorgans und der Förderrichtung. Der Verstellmechanismus wirkt hierzu auf die Führungsanordnung ein. Die Verstellung des genannten Winkels bewirkt eine Vergrösserung oder Reduktion der Bewegungskomponente des Schiebeorgans in Förderrichtung relativ zur Bewegungskomponente senkrecht zur Förderrichtung.

Der Verstellmechanismus kann eine Pneumatik- oder Hydraulikeinheit umfassen, mittels welcher durch Ein- und Ausfahren eines Stell-Zylinders die Führungsanordnung relativ zur Förderrichtung um einen Drehpunkt geschwenkt wird.

Durch eine Vergrösserung oder Reduktion der Bewegungskomponente des Schiebeorgans in Förderrichtung relativ zur Bewegungskomponente senkrecht zur Förderrichtung mittels Schwenken der Führungsanordnung kann die Schiebeeinrichtung wie bereits erwähnt an unterschiedliche Fördergeschwindigkeiten angepasst werden.

Das Schiebeorgan schiebt das auszusondernde Stückgut insbesondere zu einer Übernahmeeinrichtung. Die Übernahmeeinrichtung kann eine Weiter- bzw. Wegfördereinrichtung sein, welche das ausgesonderte Stückgut weiterfördert. Die Weiterfördereinrichtung kann ebenfalls ein flächiges Förderorgan der weiter unten genannten Art sein, auf welchem das Stückgut weitergefördert wird.

Die Weiterförderrichtung der Weiterfördereinrichtung kann in einem Winkel oder parallel zur Förderrichtung der Fördereinrichtung sein. Die Weiterfördereinrichtung kann z. B. neben der Fördereinrichtung und parallel zu dieser verlaufen.

Die Übernahmeeinrichtung kann auch eine Sammeleinrichtung sein, in welcher die ausgesonderten Stückgüter gesammelt und mindestens temporär aufbewahrt werden.

Es kann auch vorgesehen sein, dass das Stückgut durch das Schiebeorgan auf dem Förderorgan lediglich in eine andere Position geschoben wird, damit dieses z. B. von einer Übernahmeeinrichtung übernommen werden kann. Das Stückgut kann so z. B. auf ein abzweigendes Förderorgan umgeleitet werden.

Das Schiebeorgan wird in der Vorschubposition insbesondere angehalten. D.h., das Schiebeorgan bleibt in der Vorschubposition zumindest für einen kurzen Moment in Ruhe.

Das Schiebeorgan kann aus einer Ausgangsstellung, in welcher das Schiebeorgan ausserhalb des Förderbereichs angeordnet ist, oder aus einer Wartestellung über das Förderorgan in den Förderbereich in eine Vorschubposition bewegt werden.

Es ist wie bereits erwähnt auch möglich, dass das Schiebeorgan im Anschluss an eine Schiebebewegung, mit welcher ein Stückgut geschoben wird, mit dem Rückhub in die Vorschubposition für ein nächstes, auszusonderndes Stückgut zurück bewegt wird.

Zur Bestimmung der Vorschubposition ist eine Lagebestimmungseinrichtung vorgesehen, mittels welcher Lageinformationen zu einem dem Schiebeorgan zugewandten Bereich des auszusondernden Stückgutes ermittelt wird. Aufgrund der Lageinformation zu diesem Bereich wird über die Steuerungseinrichtung die Vorschubposition bestimmt. Dieser Bereich kann eine Fläche, eine Kante oder ein Punkt sein.

Unter dem dem Schiebeorgan zugewandtem Bereich des Stückguts ist ein Bereich zu verstehen, welcher dem Schiebeorgan zugewandt ist, wenn das Stückgut im Förderbereich in einem Wirkungsbereich des Schiebeorgans angeordnet ist. Anders ausgedrückt bezeichnet der dem Schiebeorgan zugewandte Bereich des Stückguts einen Bereich des Stückguts, welcher dem Schiebeorgan zugewandt ist, wenn sich das Stückgut in einer potentiellen Aussonderungsposition befindet.

Insbesondere ermittelt die Lagebestimmungseinrichtung die Lageinformation des Stückgutes unter Verwendung von einer vorbestimmten Information.

Insbesondere kann die vorbestimmte Information eine Information umfassen, dass in einem Abschnitt des Förderorgans, welcher sich von in Förderrichtung stromaufwärts der Lagebestimmungseinrichtung bis stromabwärts des Schiebeorgans erstreckt, der dem Schiebeorgan zugewandte Bereich des auszusondernden Stückgutes in orthogonaler Projektion auf die Förderfläche im Wesentlichen parallel zur Förderrichtung angeordnet ist.

Mit im Wesentlichen parallel ist gemeint, dass maximal ein Winkel von 30 Grad, insbesondere maximal ein Winkel von 15 Grad und insbesondere maximal ein Winkel von 5 Grad gebildet wird.

Indem die Annahme verwendet werden kann, dass der dem Schiebeorgan zugewandte Bereich des Stückguts im Wesentlichen parallel zur Förderrichtung ausgerichtet ist, kann die Lageinformation einfach und sicher ermittelt werden.

Insbesondere ermittelt die Lagebestimmungseinrichtung die Lageinformation des Stückgutes unter Verwendung von mindestens einer vorbestimmten Eigenschaft des Stückgutes.

Beispielsweise ist eine vorbestimmte Eigenschaft des Stückgutes, dass das Stückgut eine Form eines Quaders aufweist.

Indem die Annahme verwendet werden kann, dass das Stückgut eine vorbestimmte Eigenschaft aufweist, kann die Lageinformation einfach und sicher ermittelt werden. Insbesondere kann bei einem quaderförmigen Stückgut die Dimension und Lage des Quaders einfach und sicher ermittelt werden.

Die Lagebestimmungseinrichtung kann die Lageinformation des Stückgutes beispielsweise auch sowohl unter Verwendung der vorbestimmten Eigenschaft des Stückguts als auch unter Verwendung der vorbestimmten Information ermitteln.

Je mehr Information zu Eigenschaften des Stückguts und/oder dessen Lage bezüglich der Förderrichtung bekannt ist und zur Verwendung der Lagebestimmung verwendet werden kann, desto einfacher und zuverlässiger kann die Lage und/oder Dimension des Stückguts bestimmt werden.

Die Lagebestimmungseinrichtung erlaubt insbesondere die Ermittlung einer Lageinformation zu dem dem Schiebeorgan zugewandten äussersten Bereich des auszusondernden Stückgutes. Der äusserste Bereich ist die Kante, Fläche oder der Punkt des Stückgutes, welche bzw. welcher in der Schiebestellung die geringste Distanz zum Schiebeorgan aufweist.

Insbesondere ermittelt die Lagebestimmungseinrichtung eine Länge einer orthogonalen Projektion des dem Schiebeorgan zugewandten Bereichs des auszusondernden Stückgutes auf die Förderfläche.

Die Lagebestimmungseinrichtung ist entsprechend stromaufwärts von der Schiebeeinrichtung angeordnet.

Vorteilhafterweise wird bei der Bestimmung der Vorschubposition eine Sicherheitstoleranz miteinbezogen, welche sicherstellen soll, dass Messungenauigkeiten durch die Lagebestimmungseinrichtung oder Ungenauigkeiten in der Berechnung der Vorschubposition auf Grundlage der Lageinformationen nicht dazu führen, dass die Vorschubposition dennoch in den Bewegungsbereich des auszusondernden Stückgutes zu liegen kommt.

Die Distanz zwischen dem Schiebeorgan bzw. seiner Schiebefläche und dem dem Schiebeorgan zugewandten, äussersten Bereich des auszusondernden Stückgutes beträgt in der Vorschubposition z. B. 5 cm oder weniger, insbesondere 3 cm oder weniger.

Gemäss einer Weiterbildung der Erfindung wird mittels der Lagebestimmungseinrichtung eine Lageinformation zu einem dem Schiebeorgan zugewandten Bereich der nicht auszusondernden Stückgüter ermittelt.

Mit der Lagebestimmungseinrichtung wird insbesondere eine Lageinformation zu dem dem Schiebeorgan zugewandten, äussersten Bereich der nicht auszusondernden Stückgüter ermittelt.

Die Steuerungseinrichtung kann, in Abhängigkeit von den Lageinformationen zu den nicht auszusondernden Stückgütern berechnen, ob das Schiebeorgan in die nächste Vorschubposition oder zuerst in eine Warteposition zurückbewegt werden muss.

Die Lagebestimmungseinrichtung kann auch dazu ausgelegt sein, Lageinformationen zu dem auszusondernden Stückgut zu ermitteln, mittels welchen der Eintreffzeitpunkt des auszusondernden Stückgutes in den Schiebebereich des Schiebeorgans berechnet werden kann.

Es wird insbesondere eine Lageinformation zu einem in Förderrichtung vorlaufenden Bereich des auszusondernden Stückgutes ermittelt. Es kann insbesondere eine Lageinformation zu dem in Förderrichtung vordersten Bereich des auszusondernden Stückgutes ermittelt werden.

Aus dieser Lageinformation kann in Abhängigkeit von der ebenfalls ermittelten Fördergeschwindigkeit der Eintreffzeitpunkt des auszusondernden Stückgutes ermittelt werden.

Ferner können durch die Lagebestimmungseinrichtung weitere Lageinformationen ermittelt werden, mittels welchen Grössen wie Länge oder Breite des auszusondernden Stückgutes abgeleitet werden können. Die Dimensionsinformationen können dazu dienen, das Schiebeorgan so zu steuern, dass dieses möglichst mittig auf das Stückgut trifft.

Beim Verfahren kann zum gezielten Aussondern das Schiebeorgan beim Schieben des Stückgutes den dem Schiebeorgan zugewandten Bereich des auszusondernden Stückgutes in orthogonaler Projektion auf die Förderfläche im Wesentlichen mittig angreifen.

Ein mittiges angreifen des Schiebeorgans kann schonendes, verdrehungsfreies und/oder gleichmässiges Schieben erlauben.

So kann auch eine Lageinformation zu einem in Förderrichtung nachlaufenden Bereich des auszusondernden Stückgutes ermittelt werden. Es kann insbesondere eine Lageinformation zu dem in Förderrichtung hintersten Bereich des auszusondernden Stückgutes ermittelt werden.

Die Lagebestimmungseinrichtung umfasst insbesondere ein opto-elektronisches Messsystem mit mindestens einer opto-elektronischen Komponente zur Ermittlung von Lageinformationen.

Die opto-elektronische Komponente kann zum Beispiel eine optische Kamera oder, wie nachfolgend noch beschrieben, eine Lichtschranke oder ein optischer Distanzmesser sein. Eine Kombination mehrerer gleichartiger oder verschiedener opto-elektronischer Komponenten ist ebenfalls möglich.

Insbesondere bildet die Lagebestimmungseinrichtung einen ersten und einen zweiten Messstrahlengang aus, indem die Lagebestimmungseinrichtung einen ersten und einen zweiten Lichtstrahl aussendet.

Durch Lichtstrahlen können auf kostengünstige und ungefährliche Weise Messstrahlen erzeugt werden.

Die Steuerungseinrichtung ist insbesondere dazu ausgelegt, Messdaten der Lagebestimmungseinrichtung, wie Laufzeiten von Lichtstrahlen, Unterbrüche von Lichtstrahlen, Lichtintensitäten, Objektkonturen, Bildinhalte etc., auszuwerten und daraus Lageinformationen abzuleiten. Die Steuerungseinrichtung enthält entsprechende Softwaremittel zur Herleitung von Lageinformationen aus den Messdaten.

8

Gemäss einer Ausführungsform der Erfindung enthält die Lagebestimmungseinrichtung mindestens eine Lichtschranke und insbesondere mindestens zwei Lichtschranken.

Bei einer Lichtschranke ist der entsprechende Teil des Lichtstrahls der Messstrahl.

Die Lichtschranke ist ein berührungsloses, opto-elektronisches System, welches die Unterbrechung eines Lichtstrahls durch ein Stückgut erkennt und registriert. Auf diese Weise erhält man zu einem bestimmten Zeitpunkt eine Lageinformation zum, durch das Förderorgan bewegten Stückgut.

Das Licht des Lichtstrahls kann im sichtbaren Bereich liegen. Das Licht kann im Infrarotbereich liegen. Der Lichtstrahl kann ein Laserstrahl sein.

Die Lichtschranke enthält eine Lichtquelle (Sender) zum Aussenden eines Lichtstrahls und einen Sensor (Empfänger) zum Empfangen des Lichtstrahls. Die Lichtquelle kann eine Leuchtdiode bzw. Laserdiode sein. Der Empfänger kann ein Phototransistor, ein lichtempfindlicher Widerstand oder eine Fotodiode sein.

Die Lichtschranke kann eine Einweglichtschranke sein, bei welcher sich Sender und Empfänger einander gegenüber liegen.

Die Lichtschranke kann eine Reflex-Lichtschranke sein, bei welcher der Lichtstrahl über einen Reflektor auf den Empfänger zurückgeworfen wird. Sender und Empfänger befinden sich insbesondere parallel zueinander und sind z. B. in einem gemeinsamen Gehäuse angeordnet.

Enthält die Lagebestimmungseinrichtung mindestens zwei Lichtschranken, so können die Lichtquellen übereinander angeordnet sein. Die Lichtquellen können auch nebeneinander angeordnet sein. Die Lichtquellen können auch horizontal versetzt übereinander oder vertikal versetzt nebeneinander angeordnet sein.

Mit nebeneinander angeordneten Lichtquellen sind insbesondere in Förderrichtung betrachtet hintereinander angeordnete Lichtquellen gemeint.

Die Lichtquellen sind insbesondere auf einer gemeinsamen Achse angeordnet. Die gemeinsame Achse kann parallel zur Förderrichtung angeordnet sein. Die gemeinsame Achse kann im Wesentlichen senkrecht zur Förderfläche des Förderorgans angeordnet sein.

Die Lichtstrahlen sind über das Förderorgan gerichtet. Die Lichtstrahlen sind in den Förderbereich der Stückgüter hinein gerichtet. Die Lichtstrahlen weisen jeweils eine Richtungskomponente senkrecht zur Förderrichtung auf. Die Lichtstrahlen weisen jeweils insbesondere auch eine Richtungskomponente entgegen der Förderrichtung auf.

Mit Lichtstrahl ist insbesondere auch dessen Strahlengang gemeint.

Dass ein Lichtstrahl über das Förderorgan gerichtet ist, bedeutet anders ausgedrückt, dass der Lichtstrahl oberhalb der Förderfläche des Förderorgans verläuft und bildet mit der Förderfläche keinen Schnittpunkt aus. Ein in den Förderbereich hinein gerichteter Lichtstrahl verläuft mindestens abschnittweise im Förderbereich und bildet mit der Förderfläche keinen Schnittpunkt aus.

Die Lichtstrahlen der beiden Lichtschranken schliessen mit einer Ebene senkrecht zur Förderrichtung jeweils insbesondere einen spitzen Winkel ein. Der Winkel ist insbesondere grösser 0° (Winkelgrad) und kleiner 60°. Der Winkel ist insbesondere grösser 5° und kleiner 45°.

Die genannten Winkel der beiden Lichtstrahlen zur Ebene sind insbesondere verschieden. Entsprechend schliessen die beiden Lichtstrahlen zueinander insbesondere einen spitzen Winkel ein. Der Winkel ist insbesondere grösser 0° (Winkelgrad) und kleiner 60°. Der Winkel ist insbesondere grösser 5° und kleiner 45°.

Mittels der Steuerungseinrichtung kann nun auf der Grundlage der Fördergeschwindigkeit des Stückgutes und eines ersten Signals, welches durch die Unterbrechung des ersten Lichtstrahls und eines zweiten Signals, welches durch die Unterbrechung des zweiten Lichtstrahls durch ein an den Lichtschranken vorbei geförderten Stückguts generiert wird, unter Einsatz von Winkelfunktionen eine Lageinformation zu einem dem Schiebeorgan zugewandten Bereich des Stückgutes bestimmt werden.

Die Lichtstrahlen werden dabei durch jenen Bereich des Stückgutes unterbrochen, zu welchem die Lageinformation ermittelt wird.

Es wird insbesondere eine Lageinformation zu einem dem Schiebeorgan zugewandten äussersten Bereich des Stückgutes bestimmt.

Ferner lässt sich mittels der oben genannten Unterbrechung der Lichtschranken auch die Länge und Breite eines rechteckförmigen Stückgutes oder zumindest eine Längen- und Breitenangabe zu einem Stückgut machen.

Mit rechteckförmigem Stückgut ist Stückgut gemeint, dessen orthogonale Projektion auf die Förderfläche eine rechteckige Form ausweist. Ein rechteckiges Stückgut ist insbesondere quaderförmig.

Ein Beispiel zur Bestimmung der Lageinformation gemäss der obigen Beschreibung wird nachfolgend anhand eines Ausführungsbeispiels gegeben.

Zur Ermittlung der Fördergeschwindigkeit enthält die Vorrichtung eine Sensoreinrichtung. Die Sensoreinrichtung kann zur Messung der Geschwindigkeit des Förderorgans ausgelegt sein. Die Messung der Geschwindigkeit des Förderorgans geschieht insbesondere im Umfeld der Schiebeeinrichtung. Die Sensoreinrichtung ist insbesondere stromaufwärts von der Schiebeeinrichtung angeordnet.

Die Sensoreinrichtung kann zur Messung der Geschwindigkeit eines bewegten Elementes einer Antriebseinrichtung ausgelegt sein.

Die Sensoreinrichtung kann zur Erfassung von in gleichmässigen Abständen zueinander angeordneten, bewegten Elementen des Förderorgans, wie Kettenglieder, oder der Antriebseinrichtung, wie Zahnräder, ausgelegt sein. Aus der Zeitdifferenz zwischen zwei nacheinander erfassten Elementen lassen sich die Fördergeschwindigkeit und gegebenenfalls eine Taktinformation ableiten. Die Sensoreinrichtung kann folglich auch zur Wegtaktmessung ausgelegt sein.

Die Steuerungseinrichtung ist dazu ausgelegt, die ermittelten Lageinformationen und Geschwindigkeitsinformationen auszuwerten und basierend auf den Lage- und Geschwindigkeitsinformationen das Schiebeorgan mittels einer Antriebseinheit anzusteuern.

Die Steuerungseinrichtung ist insbesondere dazu ausgelegt, aus den genannten Lage- und Geschwindigkeitsinformationen Vorschubpositionen zu bestimmen und das Schiebeorgan mittels einer Antriebseinheit in die entsprechenden Vorschubpositionen zu bewegen.

Die Steuerungseinrichtung ist insbesondere dazu ausgelegt, aus den genannten Lage- und Geschwindigkeitsinformationen den Zeitpunkt für die Schiebebewegung des Schiebeorgans festzulegen, um das auszusondernde Stückgut auf dem Förderorgan zu verschieben.

Die Steuerungseinrichtung kann ferner eine Schnittstelle aufweisen, über welche diese mit einer übergeordneten Steuerung kommunizieren kann. Die Steuerungseinrichtung kann von der übergeordneten Steuerung z. B. Informationen über die auszusondernden Stückgüter erhalten. Die übergeordnete Steuerung kann die Steuerung der Fördervorrichtung oder die Steuerung der Anlage, in welche die Fördervorrichtung eingegliedert ist, sein.

Die Steuerungseinrichtung umfasst insbesondere entsprechende Datenverarbeitungsmittel wie Mikroprozessor und Datenspeicher sowie Schnittstellen.

Alternativ oder zusätzlich zu der oben beschriebenen mindestens einen Lichtschranke kann die Lagebestimmungseinrichtung mindestens einen Distanzsensor enthalten, mittels welchem eine Lageinformation zum äussersten Bereich eines Stückgutes auf der Seite des Schiebeorgans ermittelt werden kann. Aus der Lageinformation lässt sich die Vorschubposition für das Schiebeorgan berechnen. Der Distanzsensor kann auf einer Lichtlaufzeitmessung basieren.

Der Distanzsensor ist in Förderrichtung betrachtet insbesondere seitlich vom Förderorgan auf der Seite des Schiebeorgans angeordnet. Der Messstrahl ist insbesondere über das Förderorgan gerichtet.

Der Messstrahl ist insbesondere in den Förderbereich gerichtet. Der Messstrahl ist insbesondere senkrecht zur Förderrichtung ausgerichtet.

Das Schiebeorgan kann um eine Drehachse drehbar gelagert sein. Auf diese Weise lässt sich das Schiebeorgan in die Schiebeposition schwenken und wieder aus der Schiebeposition herausschwenken. Die Drehachse kann senkrecht zu Förderfläche des Förderorgans angeordnet sein. Die Drehachse kann parallel zur Förderfläche des Förderorgans angeordnet sein. Durch die Drehbarkeit kann das Schiebeorgan z. B. beim Rückhub einem nachfolgenden Stückgut ausweichen.

Die Schiebeeinrichtung enthält insbesondere eine Antriebseinheit zum Antreiben des Schiebeorgans. Die Antriebseinheit kann z. B. ein Servoantrieb mit einem Servomotor sowie einem Servoregler sein. Der Servoregler umfasst insbesondere eine Leistungselektronik. Der Servomotor kann ein Gleichstrommotor, ein Asynchronmotor oder ein Synchronmotor sein.

Die Schiebeeinrichtung kann auch einen Pneumatikantrieb zum Antreiben des Schiebeorgans enthalten.

Gemäss einer weiteren Ausführungsform einer Schiebeeinrichtung enthält diese eine um eine Rotationsachse rotierbare Haltevorrichtung, an welcher wenigstens ein Schiebeorgan angeordnet ist. Die Rotationsachse verläuft dabei insbesondere parallel zur Förderrichtung. Die Schiebeeinrichtung ist insbesondere oberhalb und seitlich der Förderfläche des Förderorgans angeordnet.

Das von der Haltevorrichtung gehaltene wenigstens eine Schiebeorgan bzw. die Haltevorrichtung ist nun in einer geschlossenen Bewegungsbahn um die Rotationsachse rotierbar. Die Bewegungsbahn ist z. B. bogenförmig, insbesondere kreisbogenförmig.

Die Schiebeeinrichtung ist nun so ausgelegt und relativ zum flächigen Förderorgan bzw. zur Förderfläche angeordnet, dass das Schiebeorgan in einem Bewegungsbahnabschnitt, insbesondere in einem unteren Bewegungsbahnabschnitt, quer zur Förderrichtung über das flächige Förderorgan bewegbar ist, und so Stückgüter quer über das Förderorgan, insbesondere quer vom Förderorgan, schieben kann.

Wird das wenigstens eine Schiebeorgan entlang einer bogenförmigen Bewegungsbahn um die Rotationsachse bewegt, so führt dieses über dem Förderorgan entsprechend keine rein translatorische Bewegung aus.

Das Schiebeorgan kann allerdings über eine Gelenkverbindung gelenkig an der Haltevorrichtung befestigt sein. Die gelenkige Befestigung des Schiebeorgans erlaubt eine Relativbewegung des Schiebeorgans zur Haltevorrichtung. Auf diese Weise kann mittels einer Relativbewegung eine die Umlaufbewegung überlagernde Bewegung erzeugt werden. Mit einer solchen überlagerten Bewegung lässt sich z. B. eine translatorische Bewegung des Schiebeorgans über dem Förderorgan ausführen, selbst wenn die Haltevorrichtung über dem Förderorgan eine Bogenbahn um die Rotationsachse beschreibt.

Ferner erlaubt die Relativbewegung auch eine von der Bewegungsbahn um die Rotationsachse unabhängige Ausrichtung einer Schiebefläche des wenigstens einen Schieborgans.

Die Haltevorrichtung kann wenigstens einen um die Rotationsachse drehbar gelagerten Halterungsarm umfassen, an welchem das wenigstens eine Schiebeorgan angeordnet ist.

Die Schiebeeinrichtung kann mehrere entlang des Umfangs der Haltevorrichtung um die Rotationsachse und voneinander beabstandet an der Haltevorrichtung angeordnete Schieborgane enthalten, welche in Ausübung einer Schiebefunktion durch eine Rotation der Haltevorrichtung um die Rotationsachse nacheinander über das Förderorgan bewegbar sind. Die Haltevorrichtung kann hierzu insbesondere eine Mehrzahl von Halterungsarmen enthalten.

Der Vorteil dieser Schiebeeinrichtung liegt darin, dass das wenigstens eine Schiebeorgan keinen, sich aus einem Vorhub und Rückhub zusammensetzenden diskontinuierlichen Bewegungsablauf ausführt, sondern vielmehr gleichsinnig um die Rotationsachse bewegbar ist.

Die Schiebeeinrichtung kann im Weiteren eine Rekuperationsbremse enthalten, mittels welcher beim Bremsen des Schiebeorgans Bewegungsenergie in elektrische Energie gewandelt wird. Die elektrische Energie kann wieder in einen Stromkreis eingespiesen werden.

Enthält die Vorrichtung mehrere alternierend betriebene Schiebeorgane, so kann die elektrische Energie zum Antreiben eines anderen Schiebeorgans in einen Zwischenkreis der Vorrichtung eingespiesen werden.

Die Rekuperationsbremse kann eine elektromotorische Bremse bzw. elektrische Generatorbremse sein. Die Rekuperationsbremse kann durch einen im Generatorbetrieb arbeitender Asynchronmotor oder Drehstromsynchronmotor ausgebildet werden.

Das Förderorgan ist insbesondere ein umlaufendes Förderorgan. Das Förderorgan kann ein Förderband, ein Fördergurt oder eine Modulbandkette mit einer Mehrzahl von miteinander verketteten Plattenelementen sein. Das Förderorgan kann auch ein Rollenteppich mit einer Mehrzahl von stationären Rollen sein. Die Rollen können aktiv durch einen Antrieb oder passiv durch die bewegen Stückgüter angetrieben sein. Weitere an dieser Stelle nicht genannte Förderorgane, welche eine Förderfläche ausbilden, sind möglich.

Die Stückgüter können Pakete, Boxen, Schachteln, Kisten, Taschen, verpackte Güter, wie Lebensmittel, Kartons, Getränkegebinde, gebündelte Druckereiprodukte, etc. sein.

Die Erfindung betrifft im Weiteren auch einen Bausatz für eine oben beschriebene Vorrichtung zur Ausführung des oben beschriebenen Verfahrens.

Der Bausatz umfasst eine Schiebeeinrichtung mit einem mindestens ein- oder zweiseitig abgestützten Gestell. Das Gestell ist insbesondere eine Tragkonstruktion aus Profilen.

Das Gestell enthält ein über einem Förderorgan, d.h. oberhalb eines Förderorgans, positionierbare Tragstruktur. Die Tragstruktur verläuft insbesondere quer über das Förderorgan. An der Tragstruktur ist eine Führungsanordnung angeordnet. Das Schiebeorgan ist in der Führungsanordnung oberhalb des Förderorgans verschiebbar geführt.

Am Gestell kann auch eine oben beschrieben Verstelleinrichtung zum Verstellen der Führungsanordnung angeordnet sein.

Am Gestell kann ferner eine oben beschriebene Antriebsanordnung, wie Servoantrieb, angeordnet sein.

Der Bausatz umfasst insbesondere auch eine Lagebestimmungseinrichtung. Die Lagebestimmungseinrichtung kann ebenfalls ein Gestell oder mehrere Gestelle umfassen, an welchem Mittel, insbesondere Sensormittel zur Erfassung von Lageinformationen zu den Stückgütern angeordnet sind. Diese Mittel können Elemente von Lichtschranken, wie Lichtquelle, Lichtsensor oder Reflektor, sowie Distanzsensoren oder Kameras sein.

Der Bausatz kann im Weiteren auch einen Geschwindigkeitssensor umfassen, welcher zur Ermittlung der Fördergeschwindigkeit der Stückgüter direkt oder indirekt die Geschwindigkeit des Förderorgans oder eines bewegten Elementes der Antriebseinrichtung misst.

Der Bausatz kann im Weiteren eine Steuerungseinrichtung der oben beschriebenen Art umfassen.

Der erfindungsgemässe Bausatz zeichnet sich dadurch aus, dass dieser von der Fördervorrichtung unabhängig ist. Sowohl die Schiebeeinrichtung als auch die Lagebestimmungseinrichtung und der Geschwindigkeitssensor sind von der Fördervorrichtung unabhängig. Entsprechend lässt sich eine bestehende Fördervorrichtung mit einem solchen Bausatz nachrüsten. Dies geschieht, ohne dass nennenswerte Modifikationen an der zugehörigen Fördervorrichtung vorgenommen werden müssen.

Es muss einzig über die Schnittstelle der Steuerungseinrichtung eine Verbindung zu einer übergeordneten Steuerung hergestellt werden, um von dieser prozessrelevante Informationen, wie z. B. Steuerinformationen über die auszusondernden Stückgüter, zu erhalten.

Im Folgenden wird der Erfindungsgegenstand anhand von besonderen Ausführungsbeispielen, welche in den beiliegenden Figuren dargestellt sind, näher erläutert. Es zeigen jeweils schematisch:

Figur 1:    eine Draufsicht einer erfindungsgemässen Vorrichtung aus dem Bereich der Lagebestimmungseinrichtung gemäss einer ersten Ausführungsform;

Figur 2:    eine Draufsicht einer erfindungsgemässen Vorrichtung aus dem Bereich der Lagebestimmungseinrichtung gemäss einer zweiten Ausführungsform;

Figur 3a: eine Draufsicht einer erfindungsgemässen Vorrichtung aus dem Bereich der Lagebestimmungseinrichtung gemäss einer dritten Ausführungsform;

Figur 3b: eine Draufsicht einer erfindungsgemässen Vorrichtung mit einer Lagebestimmungseinrichtung nach Figur 3a und einer Schiebeeinrichtung nach Figur 5a bis 5c;

Figur 4a: eine Draufsicht auf eine schematisch dargestellte Fördereinrichtung mit dem Verlauf des Lichtstrahls der Lichtschranken mit eingetragenen geometrischen Grössen zur Bestimmung einer Distanz h1;

Figur 4b: eine Draufsicht auf eine schematisch dargestellte Fördereinrichtung mit dem Verlauf des Lichtstrahls der Lichtschranken mit eingetragenen geometrischen Grössen zur Bestimmung einer Breite B und einer Länge L des Stückgutes;

Figur 5a: eine Draufsicht einer erfindungsgemässen Vorrichtung aus dem Bereich der Schiebeeinrichtung gemäss einer ersten Ausführungsform;

Figur 5b: eine Seitenansicht der Vorrichtung nach Figur 5a quer zur Förderrichtung;

Figur 5c: eine Ansicht in Förderrichtung der Vorrichtung nach Figur 5a und 5b;

Figur 6: eine Draufsicht einer erfindungsgemässen Vorrichtung aus dem Bereich der Schiebeeinrichtung gemäss einer zweiten Ausführungsform;

Figur 7: eine Draufsicht einer erfindungsgemässen Vorrichtung aus dem Bereich der Schiebeeinrichtung gemäss einer dritten Ausführungsform;

Figur 8: eine Draufsicht auf eine schematisch dargestellte Fördereinrichtung mit Schiebeorganen in verschiedenen Vorschubpositionen;

Figur 9: eine Draufsicht einer erfindungsgemässen Vorrichtung analog zu Figur 3a aber ohne Distanzsensor.

Grundsätzlich sind in den Figuren gleiche Teile mit gleichen Bezugszeichen versehen. Die beschriebenen Ausführungsbeispiele stehen beispielhaft für den Erfindungsgegenstand und haben keine beschränkende Wirkung.

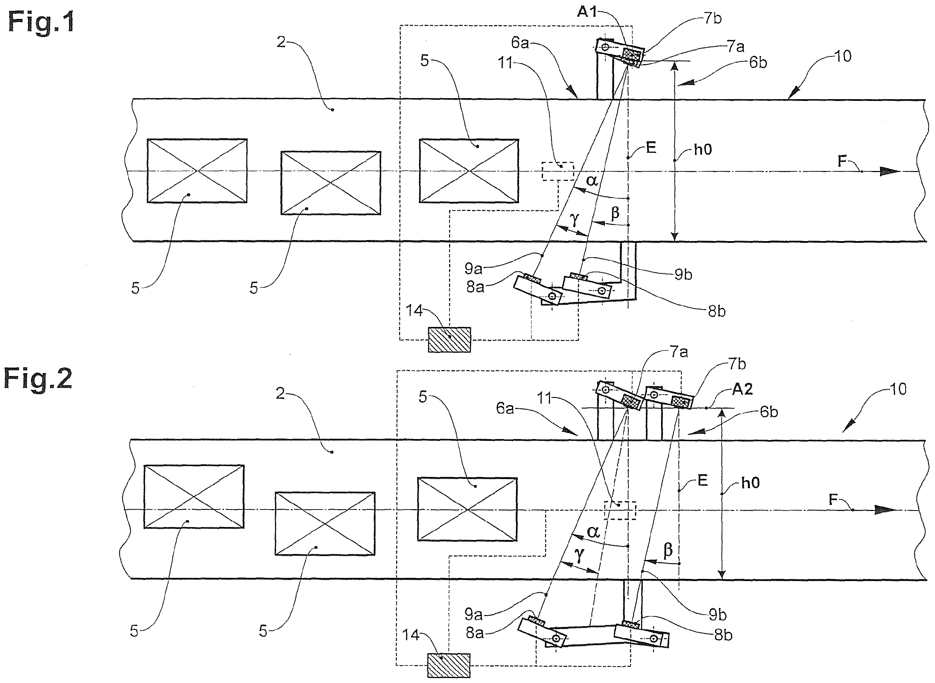

Die Figuren 1, 2, 3a und 3b zeigen einen Bandförderer 10 mit einem Förderband 2 als Förderorgan, auf welchem in einem Förderstrom, voneinander beabstandet, rechteckförmige Stückgüter 5 in Förderrichtung F gefördert werden.

Am Bandförderer 10 unterhalb des Förderbandes 2 ist ein Geschwindigkeitssensor 11 angeordnet, mittels welchem die Geschwindigkeit des Förderbandes 2 und somit die Fördergeschwindigkeit der Stückgüter 5 im Bereich der Schiebeeinrichtung direkt oder indirekt ermittelt wird.

Die Figuren 1, 2, 3a und 3b zeigen nun verschiedene Ausführungsformen von Lagebestimmungseinrichtungen, welche am Bandförderer 10 angeordnet sind.

In der erfindungsgemässen Vorrichtung sind die Lagebestimmungseinrichtung sowie der Geschwindigkeitssensor 11 jeweils stromaufwärts von der Schiebeeinrichtung angeordnet.

Die Lagebestimmungseinrichtungen gemäss den Figuren 1, 2, 3a und 3b umfassen jeweils eine erste Lichtschranke 6a mit einer ersten Lichtquelle 7a und einem ersten Sensor 8a. Die Lichtquelle 7a der ersten Lichtschranke 6a erzeugt einen zum ersten Sensor 8a gerichteten ersten Lichtstrahl 9a. Lichtquelle 7a und Sensor 8a sind auf einander gegenüber liegenden Seiten des Förderbandes 2 angeordnet.

Im Weiteren enthält die Lagebestimmungseinrichtung eine zweite Lichtschranke 6b mit einer zweiten Lichtquelle 7b und einem zweiten Sensor 8b. Die Lichtquelle 7b der zweiten Lichtschranke 6b erzeugt einen zum zweiten Sensor 8b gerichteten zweiten Lichtstrahl 9b. Lichtquelle 7b und Sensor 8b sind auf einander gegenüber liegenden Seiten des Förderbandes 2 angeordnet. Die Lichtstrahlen 9a, 9b überqueren das Förderorgan 2 oberhalb der Förderfläche und sind in den Förderbereich hinein gerichtet.

Die Lichtquellen 7a, 7b der ersten und zweiten Lichtschranke 6a, 6b sind an einem gemeinsamen Träger befestigt. Die Sensoren 8a, 8b der ersten und zweiten Lichtschranke 6a, 6b sind ebenfalls an einem gemeinsamen Träger befestigt.

Der erste Lichtstrahl 9a schliesst zu einer Ebene E, welche senkrecht zur Förderrichtung F angeordnet ist einen spitzen Winkel $\alpha$ ein. Der zweite Lichtstrahl 9b schliesst zur genannten Ebene E einen spitzen Winkel $\beta$ ein. Die beiden Winkel $\alpha$ und $\beta$ sind unterschiedlich gross. Folglich schliessen die beiden Lichtstrahlen 9a, 9b zueinander ebenfalls einen spitzen Winkel $\gamma$ ein.

Die Sensoren 8a, 8b sind auf der gegenüber liegenden Seite des Förderbandes 2 so angeordnet, dass diese die Lichtstrahlen 9a, 9b empfangen.

Die Sensoren 8a, 8b sind auf derselben Seite des Förderbandes 2 angeordnet wie das Schiebeorgan.

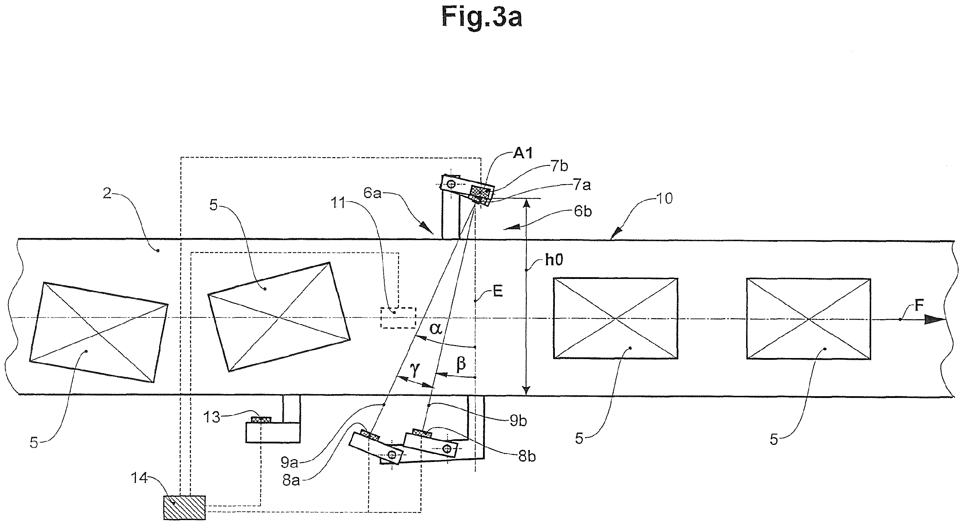

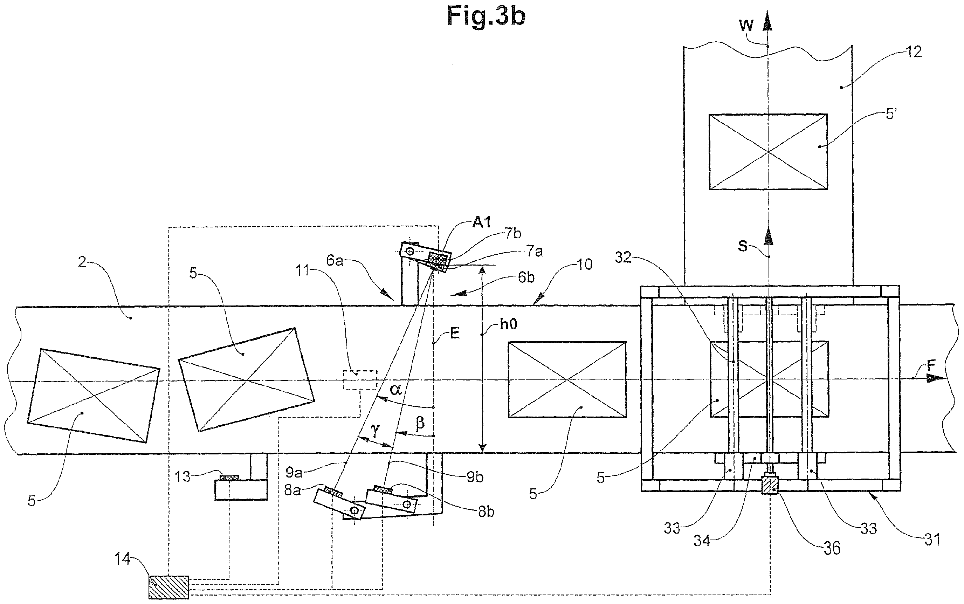

Gemäss den in Figur 1 und 3 gezeigten Ausführungsformen sind die beiden Lichtquellen 7a, 7b auf einer gemeinsamen Achse A1, welche senkrecht zur Förderfläche angeordnet ist, übereinander positioniert.

Gemäss der in Figur 2 gezeigten Ausführungsform sind die beiden Lichtquellen 7a, 7b auf einer gemeinsamen Achse A2, welche senkrecht zur Ebene E angeordnet ist, nebeneinander positioniert.

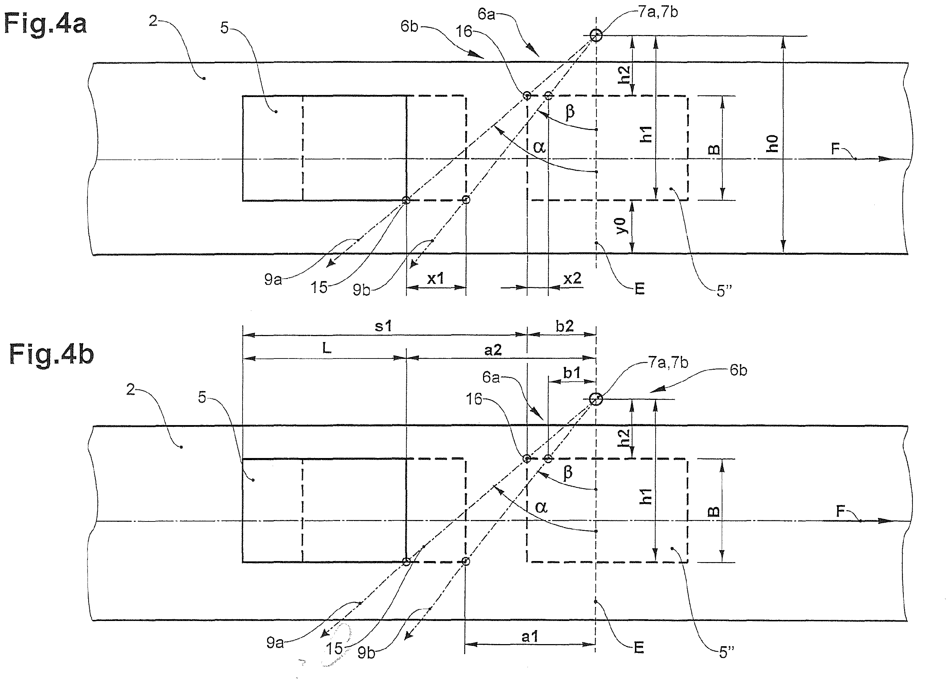

Die Funktionsweise der Lichtschranken 6a, 6b zur Ermittlung von Lageinformationen zu den geförderten Stückgütern 5 wird nachfolgend anhand der Figur 4a und 4b näher erläutert.

Die Lagebestimmungseinrichtung gemäss der in Figur 3a gezeigten Ausführungsform enthält zusätzlich einen Distanzsensor 13, welcher auf der gleichen Seite des Bandförderers 10 angeordnet ist wie das Schiebeorgan. Der Distanzsensor 13 dient dazu, die Distanz zum Stückgut 5 zu messen. So kann mit dem Distanzsensor 13 der äusserste zum Schiebeorgan weisende Bereich des Stückgutes 5 ermittelt werden. Da die Lage des Distanzsensors 13 bekannt ist, lässt sich aus den Distanzinformationen, wie Laufzeiten eines Signals, die Vorschubposition des Schiebeorgans ermitteln.

Der Distanzsensor 13 ist vor allem dann von grossem Nutzen, wenn die Stückgüter 5 schräg auf dem Förderband angeordnet sind oder eine komplexe geometrische Dimension aufweisen. In diesen Fällen lässt sich die Lage des äussersten zum Schiebeorgan weisenden Bereichs des Stückgutes 5 mittels den Lichtschranken 6a, 6b nicht genau genug ermitteln. Die Lage dieses Bereichs ist jedoch von grosser Bedeutung, da die zu bestimmende Vorschubposition davon abhängt.

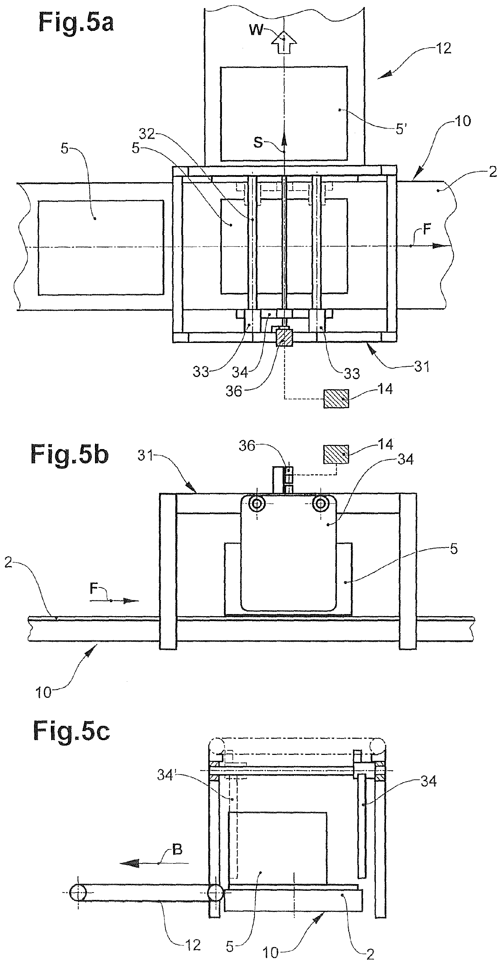

Die Figur 3b zeigt nun eine Ausführungsform einer erfindungsgemässen Vorrichtung mit einer Lagebestimmungseinrichtung nach Figur 3a und einer Schiebeeinrichtung nach Figur 5a bis 5c. Die Schiebeeinrichtung wird nachfolgend anhand der Figuren 5a bis 5c noch näher beschrieben. Die Elemente der Lagebestimmungseinrichtung, wie die erste und zweite Lichtschranke 6a, 6b und der Distanzsensor 13, sowie der Geschwindigkeitssensor 11 und im Weiteren die Antriebsanordnung 36 mit dem Antrieb sind über eine gemeinsame Steuerungseinrichtung 14 steuerungstechnisch miteinander verbunden.

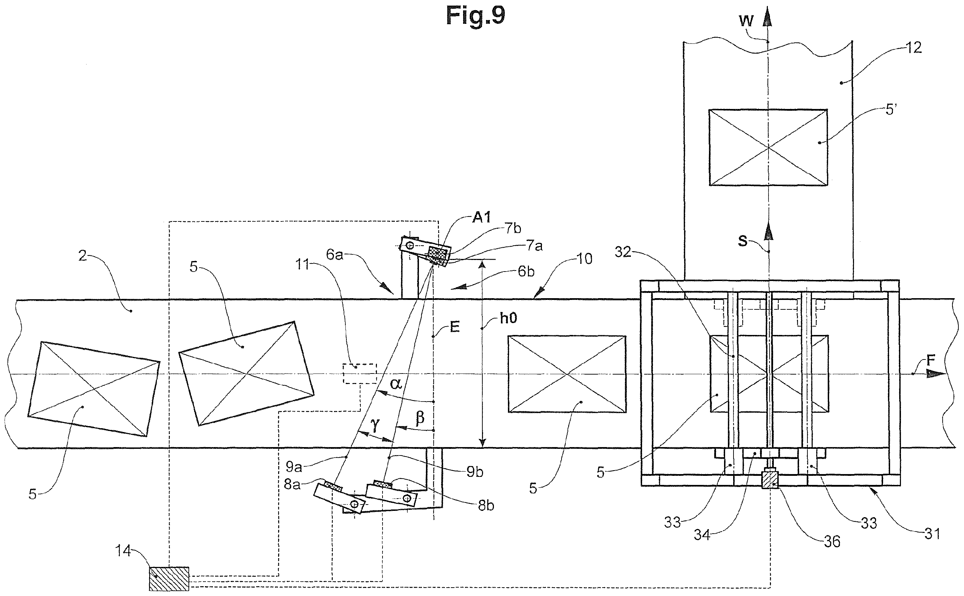

In Figur 9 ist eine Ausführungsform einer Lagebestimmungseinrichtung analog zu Figur 3b dargestellt, wobei die Lagebestimmungseinrichtung in Figur 9 im Unterschied zu derjenigen in Figur 3b keinen Distanzsensor 13 umfasst.

Die oben beschriebene Anordnung von Lichtschranken 6a, 6b und die Ausrichtung der Lichtstrahlen 9a, 9b erlaubt nun für den idealisierten Fall eines rechteckigen, parallel zur Förderrichtung F ausgerichteten Stückgutes die Bestimmung der Breite B und der Länge L des Stückgutes, sowie die Bestimmung der Distanz h1 zwischen Lichtquelle 7a, 7b und der äussersten, zum Schiebeorgan gerichteten Kante 15 des Stückgutes 5 und daraus die Bestimmung der Vorschubposition des Schiebeorgans. Die Breite B bezieht sich dabei auf die Erstreckung des Stückgutes 5 senkrecht zur Förderrichtung F und die Länge L bezieht sich auf die Erstreckung des Stückgutes 5 in Förderrichtung F.

Anhand der Figuren 4a und 4b werden nachfolgend die trigonometrischen Beziehungen erläutert, welche die Berechnung der Vorschubposition erlauben. Die Figur 4a und 4b zeigen schematisch das auf einem Förderband 2 parallel in Förderrichtung ausgerichtete, rechteckförmige Stückgut 5, 5" in zwei Förderpositionen im Bereich der Lichtschranken 6a, 6b.

Bekannte Grössen sind einerseits die Winkel $\alpha$ und $\beta$, welche die beide Lichtstrahlen 9a, 9b jeweils mit der Ebene E senkrecht zur Förderrichtung F einschliessen. Ferner ist die Position der Lichtquellen 7a, 7b als auch die Distanz h0 zwischen den Lichtquelle 7a, 7b und der, den Lichtquelle 7a, 7b gegenüber liegenden Ende des Förderorgans 2 bekannt. Bekannt ist auch die Fördergeschwindigkeit, mittels welcher das Stückgut 5 in Förderrichtung F gefördert wird.

Das Stückgut 5 trifft während seiner Förderung mit einer ersten Kante 15 den ersten Lichtstrahl 9a der ersten Lichtschanke 6a und unterbricht diesen. Die erste Kante 15 ist eine vorlaufende, äusserste, dem Schiebeorgan zugewandte Kante. Der Zeitpunkt des Unterbruchs des Lichtstrahls 9a wird vom dazugehörigen Sensor 8a der ersten Lichtschranke 6a registriert.

Das Stückgut 5 unterbricht nach Zurücklegen des Förderweges x1 mit der ersten Kante 15 auch den zweiten Lichtstrahl 9b der zweiten Lichtschranke 6b. Der Zeitpunkt des Unterbruchs des zweiten Lichtstrahls 9b wird vom dazugehörigen Sensor 8b der zweiten Lichtschranke 6b ebenfalls registriert.

Aus den trigonometrischen Beziehungen (siehe Figur 4a):

$$a1 = h1 \cdot \tan \beta \qquad a2 = h1 \cdot \tan \alpha$$

lässt sich die Funktion:

$$x1 = a2 - a1 = h1 \cdot (\tan \alpha - \tan \beta)$$

ableiten, und daraus die Funktion:

$$h1 = \frac{x1}{(\tan \alpha - \tan \beta)}$$

Die beiden Winkel α und β sind bereits bekannt. Die Distanz x1 lässt sich aus der bekannten Fördergeschwindigkeit und aus der Zeitspanne zwischen der Unterbrechung der beiden Lichtschranken 6a, 6b berechnen. Somit kann auch die Distanz h1 berechnet werden.

Aus der Distanz h1 lässt sich folglich auch die Distanz y0 von der besagten Kante des Stückgutes 5 zum Rand des Förderorgans 2 auf der dem Schiebeorgan zugewandten Seite berechnen:

$$y0 = h0 - h1$$

$$y0 = h0 - \frac{x1}{(\tan \alpha - \tan \beta)}$$

Folglich lässt sich aus y0 auch die Vorschubposition berechnen.

Zur Berechnung der Breite B des Stückgutes wird die Distanz h2 zwischen den Lichtquellen 7a, 7b und dem Stückgut 5 auf dem Förderorgan 2 benötigt.

$$B = h1 - h2$$

Verlässt nun das inzwischen weiter geförderte Stückgut 5" den Bereich der Lichtschranken 6a, 6b wieder, so gibt eine zweite Kante 16 des Stückguts 5" die erste Lichtschranke 6a wieder frei. Die zweite Kante 16 ist eine nachlaufende, den Lichtquellen 7a, 7b zugewandte, äusserste Kante. Der Zeitpunkt der Aufhebung der Unterbrechung des ersten Lichtstrahls 9a durch das Stückgut 5" wird vom entsprechenden Sensor 8a entsprechend registriert.

Das Stückgut 5" gibt an der zweiten Kante 16 nach Zurücklegen des Förderweges x2 auch den zweiten Lichtstrahl 9b der zweiten Lichtschranke 6b wieder frei. Der Zeitpunkt der Aufhebung der Unterbrechung des zweiten Lichtstrahls 9b wird vom dazugehörigen Sensor 8b der zweiten Lichtschranke 6b ebenfalls registriert. Die Distanz h2 lässt sich nun analog zur Distanz h1 von x2 ableiten, so dass sich folgende Beziehung ergibt:

$$B = \frac{x1}{(\tan \alpha - \tan \beta)} - \frac{x2}{(\tan \alpha - \tan \beta)}$$

vereinfacht:

$$B = \frac{x1-x2}{(\tan \alpha - \tan \beta)}$$

Im Weiteren lässt sich auch die Länge des Stückgutes 5 durch folgende Beziehung herleiten:

$$s1 = L + h1 \cdot \tan(\alpha) - h2 \cdot \tan(\alpha)$$

$$s1 = L + \tan(\alpha) \cdot (h1-h2) = L + \tan(\alpha) \cdot B$$

$$L = s1 - \tan(\alpha) \cdot B$$

Die Distanz s1 lässt sich aus der Fördergeschwindigkeit sowie der Zeitspanne zwischen der Unterbrechung des ersten Lichtstrahls 9a der ersten Lichtschranke 6a und der Aufhebung der Unterbrechung des ersten Lichtstrahls 9a berechnen.

Anhand der nun bekannten Länge L des Stückgutes lässt sich mittels der Steuerungseinrichtung 14 der ideale Auslösezeitpunkt für das Schiebeorgan 4 ermitteln, so dass dieses das Stückgut 5 beim Schieben möglichst mittig kontaktiert. Ferner kann anhand der bekannten Breite B des Stückguts 5 der optimale Schiebehub $H_S$ berechnet werden, welcher notwendig ist, um das Stückgut 5 zu einer Übernahmeeinrichtung hin zu schieben bis dieses sich selbsttätig oder mit Unterstützung eines Förderorgans der Übernahmeeinrichtung weiterbewegt.

Ist nun das Stückgut 5, wie in Figur 3 dargestellt, nicht parallel zur Förderrichtung F ausgerichtet, sondern schräg zu dieser, so geben die oben genannten trigonometrischen Beziehungen nicht mehr die effektive Länge L und Breite B des Stückgutes wieder. Die genannten Grössen entsprechen vielmehr der Distanz zwischen den durch die Lichtschranken 6a, 6b erfassten vorlaufenden und nachlaufenden, äussersten Kanten parallel und senkrecht zur Förderrichtung F.

Mit anderen Worten könnte aufgrund einer Annahme, dass das Stückgut parallel zur Förderrichtung ausgerichtet ist, durch diese Distanz eine virtuelle, kleinere rechteckige bzw. quaderförmige Form mit entsprechend verkürzten Seitenlängen berechnet werden.

Bei geringfügiger Schrägstellung des Stückgutes führt dies nur zu geringfügigen Abweichungen, welche für die vorliegende Anwendung vernachlässigbar sind. Geringfügige Abweichungen lassen sich durch die Aufnahme von Sicherheitstoleranzen bei der Berechnung der Vorschubposition korrigieren. Bei einer grösseren Schrägstellung wird jedoch die äusserste, dem Schiebeorgan zugewandte Kante nicht korrekt erfasst. Folglich wird ein falscher Wert für die Vorschubposition berechnet. In solchen Situationen schafft der zusätzliche Distanzsensor 13, wie in Figur 3 gezeigt, Abhilfe.

Die Schiebeeinrichtungen gemäss den Figuren 5 bis 7 umfassen jeweils ein quer über das Förderorgan 2 aus Profilen errichtetes Gestell 21, 31, 41. Über dem Förderorgan 2 ist am Gestell 21, 31, 41 eine Führungsanordnung 22, 32, 42 mit Führungsprofilen angebracht. An den Führungsprofilen ist jeweils ein paddelförmiges Schiebeorgan 24, 34, 44 über ein Führungsglied 23, 33, 43 verschiebbar geführt, so dass dieses einen geführten Schiebehub quer zur Förderrichtung F ausführt. Das Schiebeorgan 24, 34, 44 wird über eine Antriebsanordnung 26, 36, 46 angetrieben. Die Antriebsanordnung 26, 36, 46 und somit der Antrieb des Schiebeorgan 24, 34, 44 geschieht über eine Steuerungseinrichtung 14.

Die Schiebeeinrichtung ist dazu ausgelegt, die auf dem Förderorgan 2 geförderten Stückgüter 5 quer zur Förderrichtung F zu einer Übernahmeeinrichtung 12 hin zu schieben. Die ausgesonderten Stückgüter 5' werden von der Übernahmeeinrichtung 12 übernommen und in Wegförderrichtung W weggefördert.

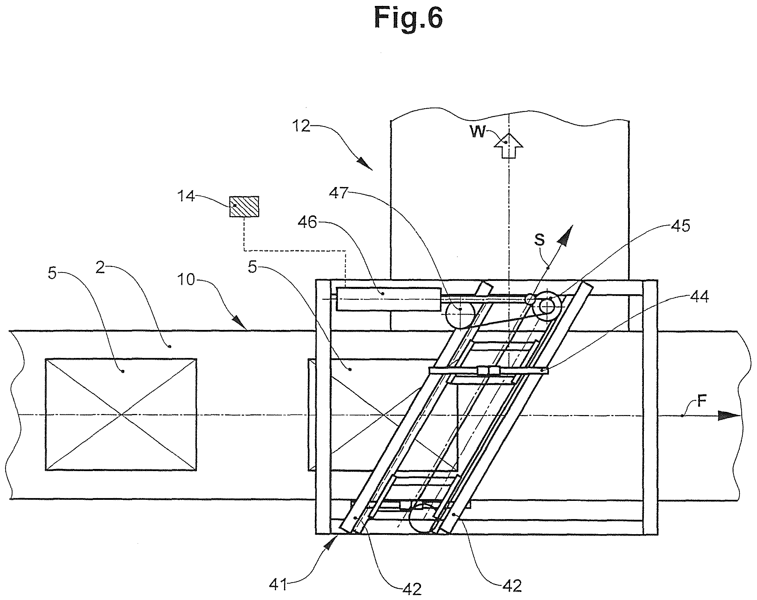

Gemäss der Ausführungsform nach Figur 5a bis 5c verläuft die Schieberichtung S des Schiebeorgans 34 senkrecht zur Förderrichtung F. Entsprechend verlaufen die Führungsprofile der Führungsanordnung 32 ebenfalls senkrecht zur Förderrichtung F. Das Schiebeorgan 34 kann z. B. durch einen Servoantrieb angetrieben sein. Gemäss der Ausführungsform nach Figur 6 verläuft die Schieberichtung S des Schiebeorgans schräg zur Förderrichtung F und weist eine Bewegungskomponente parallel zur Förderrichtung F sowie eine Bewegungskomponente senkrecht zur Förderrichtung F auf. Die Bewegungskomponente senkrecht zur Förderrichtung F bildet den Schiebehub Hs aus. Entsprechend verlaufen die Führungsprofile der Führungsanordnung 42 schräg in Schieberichtung S.

Die Antriebsanordnung 46 umfasst einen Pneumatikantrieb, welcher das Schiebeorgan 44 über eine Übersetzung antreibt. Die Übersetzung umfasst einen Teleskopschlitten sowie einen Kettenantrieb 45. Der Zylinder des Pneumatikantriebs betätigt den Teleskopschlitten, welcher eine Hin- und Herbewegung ausführen kann. Der Teleskopschlitten wiederum überträgt die lineare Bewegung auf den Kettenantrieb 45. Diese Antriebsart ist jedoch nicht an eine bestimmte Schieberichtung S und somit Ausrichtung der Führungsanordnung 42 gebunden.

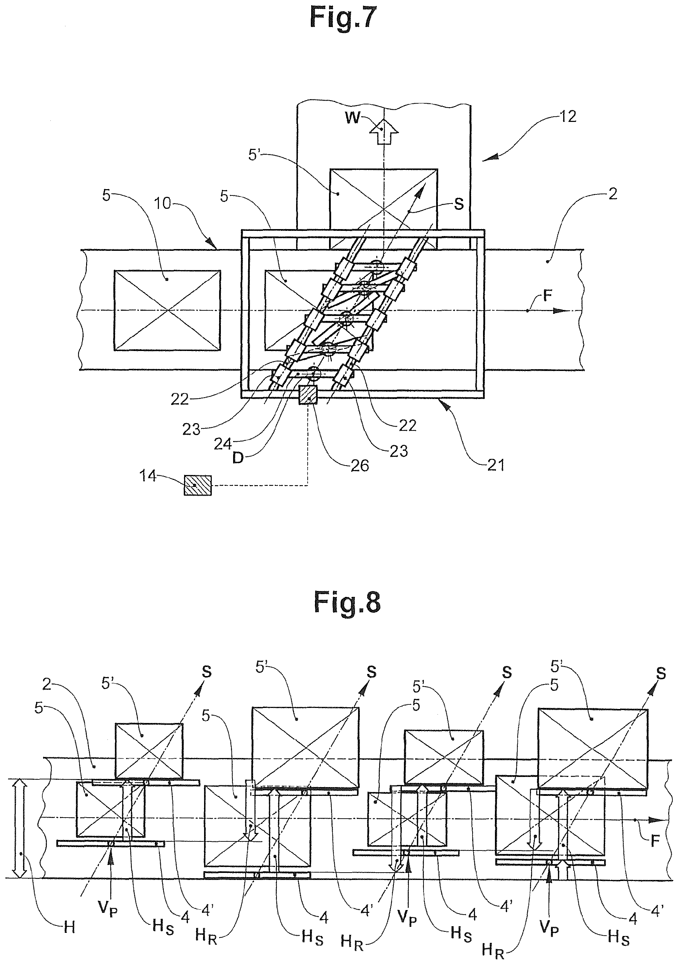

Gemäss der Ausführungsform nach Figur 7 verläuft die Schieberichtung S des Schiebeorgans ebenfalls schräg zur Förderrichtung F und weist eine Bewegungskomponente parallel zur Förderrichtung F sowie eine Bewegungskomponente senkrecht zur Förderrichtung F auf. Entsprechend verlaufen die Führungsprofile der Führungsanordnung 22 schräg in Schieberichtung S.

Ferner ist das Schiebeorgan 24 um eine senkrecht zur Förderfläche verlaufende Drehachse D drehbar gelagert. Durch Drehung des Schiebeorgans 24 um die Drehachse D lässt sich dieses in eine Orientierung quer zur Förderrichtung F drehen. Dadurch kann das Schiebeorgans 24 aus dem Einflussbereich eines nachfolgenden Stückgutes 5 gedreht werden. Dies kann insbesondere dann notwendig sein, wenn zwei benachbarte Stückgüter 5 nur wenig voneinander beabstandet sind. Die Drehbarkeit des Schiebeorgans 24 ist jedoch nicht an eine bestimmte Schieberichtung S und somit Ausrichtung der Führungsanordnung gebunden.

Die Schiebeeinrichtungen nach den Figuren 5 bis 7 sind beliebig mit Lagebestimmungseinrichtungen nach den Figuren 1 bis 3 kombinierbar.

Die Figur 8 zeigt eine Mehrzahl von unterschiedlich grossen und an unterschiedlichen Stellen auf dem Förderorgan 2 positionierten Stückgüter 5. Ferner werden die unterschiedlichen Vorschubpositionen $V_P$ des Schiebeorgans 4 für die einzelnen Stückgüter 5 dargestellt.

Bei herkömmlichen Schiebeeinrichtungen wird das Schiebeorgan nach jedem Schiebehub in eine Ausgangsposition am Rand oder hinter dem Förderorgan zurück bewegt. Die Ausgangsposition ist so festgelegt, dass diese mit Sicherheit ausserhalb des Förderbereichs der Stückgüter liegt. Folglich wird bei einem Schiebevorgang ein maximaler Hub H ausgeführt.

Gemäss der vorliegenden Erfindung erfolgt der Schiebehub $H_S$ aus der Vorschubposition $V_P$. Der Schiebehub $H_S$ ist daher immer nur so gross wie zum Aussondern des Stückgutes 5 notwendig.

Die Grösse des Rückhubes $H_R$ des Schiebeorgans 4' richtet sich nach der Vorschubposition $V_P$ des als nächstes auszusondernden Stückgutes 5 oder allenfalls nach der Warteposition, was im gezeigten Ausführungsbeispiel jedoch nicht der Fall ist.

Somit kann der Rückhub $H_R$, grösser, gleich oder kleiner wie der Schiebehub $H_S$ sein. Der Rückhub $H_R$ ist jedoch immer mindestens so gross, dass das Schiebeorgan 4 nicht in den Bewegungsbereich eines nachfolgenden Stückgutes 5 zu liegen kommt.

## Patentansprüche

1. Verfahren zum Erfassen und gezielten Aussondern von einzelnen Stückgütern (5), welche hintereinander auf einem flächigen Förderorgan (2) in einer Förderrichtung (F) gefördert werden,

   wobei das auszusondernde Stückgut (5) mittels eines Schiebeorgans (4, 24, 34, 44) quer zur Förderrichtung (F) verschoben wird, indem das Schiebeorgan (4, 24, 34, 44) quer zur Förderrichtung (F) in den Förderbereich der Stückgüter (5) hinein bewegt wird, und

   wobei mittels einer Lagebestimmungseinrichtung eine Lageinformation zu einem dem Schiebeorgan (4, 24, 34, 44) zugewandten Bereich des auszusondernden Stückgutes (5) ermittelt wird und aufgrund der Lageinformation eine Vorschubposition ($V_P$) bestimmt wird, und

   wobei die Vorschubposition ($V_P$) durch eine Steuerungseinrichtung (14) in Abhängigkeit der Lageinformationen zum auszusondernden Stückgut (5) auf dem Förderorgan (2) festgelegt wird, und

   wobei das Schiebeorgan (4, 24, 34, 44) vor dem Schieben des auszusondernden Stückgutes (5) in die im Förderbereich über dem Förderorgan (2) liegende Vorschubposition ($V_P$) bewegt wird und das auszusondernde Stückgut (5) durch Beschleunigen des Schiebeorgans (4, 24, 34, 44) aus der Vorschubposition ($V_P$) in eine Schieberichtung (S) durch das Schiebeorgan (4, 24, 34, 44) über das Förderorgan (2) geschoben wird, und

   wobei die Lagebestimmungseinrichtung einen ersten und einen zweiten Messstrahlengang ausbildet, wobei eine orthogonale Projektion des ersten Messstrahlengangs und des zweiten Messstrahlengangs auf eine Ebene, in welcher eine Förderfläche des Förderorgans (2) liegt, als eine erste und eine zweite Messstrahlengangprojektion bezeichnet wird,

   wobei die erste Messstrahlengangprojektion und die zweite Messstrahlengangprojektion sich ausserhalb der Förderfläche kreuzen.

2. Verfahren gemäss Anspruch 1, **dadurch gekennzeichnet, dass** die Lagebestimmungseinrichtung die Lageinformation des Stückgutes (5) unter Verwendung von mindestens einer vorbestimmten Eigenschaft des Stückgutes (5) ermittelt, wobei insbesondere eine vorbestimmte Eigenschaft des Stückgutes (5) ist, dass das Stückgut (5) eine Form eines Quaders aufweist.

3. Verfahren gemäss Anspruch 2, **dadurch gekennzeichnet, dass** die Lagebestimmungseinrichtung die Lageinformation des Stückgutes (5) unter Verwendung von einer vorbestimmten Information ermittelt, dass in einem Abschnitt des Förderorgans (2), welcher sich von in Förderrichtung (F) stromaufwärts der Lagebestimmungseinrichtung bis stromabwärts des Schiebeorgans (4, 24, 34, 44) erstreckt, der dem Schiebeorgan (4, 24, 34, 44) zugewandte Bereich des auszusondernden Stückgutes (5) in orthogonaler Projektion auf die Förderfläche im Wesentlichen parallel zur Förderrichtung (F) angeordnet ist.

4. Verfahren gemäss einem der Ansprüche 1 bis 3, **dadurch gekennzeichnet, dass** die Lagebestimmungseinrichtung eine Länge einer orthogonalen Projektion des dem Schiebeorgan (4, 24, 34, 44) zugewandten Bereichs des auszusondernden Stückgutes (5) auf die Förderfläche ermittelt.

5. Verfahren gemäss einem der Ansprüche 1 bis 4, **dadurch gekennzeichnet, dass** zum gezielten Aussondern das Schiebeorgan (4, 24, 34, 44) beim Schieben des auszusondernden Stückgutes (5) den dem Schiebeorgan (4, 24, 34, 44) zugewandten Bereich des auszusondernden Stückgutes (5) in orthogonaler Projektion auf die Förderfläche im Wesentlichen mittig angreift.

6. Verfahren gemäss einem der Ansprüche 1 bis 5, **dadurch gekennzeichnet, dass** die Lagebestimmungseinrichtung einen ersten und einen zweiten Messstrahlengang ausbildet indem die Lagebestimmungseinrichtung einen ersten und einen zweiten Lichtstrahl aussendet.

7. Verfahren gemäss einem der Ansprüche 1 bis 6, **dadurch gekennzeichnet, dass** mittels der Lagebestimmungseinrichtung eine Lageinformation zu einem dem Schiebeorgan (4, 24, 34, 44) zugewandten Bereich der nicht auszusondernden Stückgüter (5) ermittelt wird und aufgrund der Lageinformation gegebenenfalls eine Warteposition bestimmt wird, in welche das Schiebeorgan (4, 24, 34, 44) nach dem Schieben eines Stückgutes (5) zurück bewegt wird.

8. Verfahren gemäss einem der Ansprüche 1 bis 7, **dadurch gekennzeichnet, dass** die Lagebestimmungseinrichtung zwei Lichtschranken (6a, 6b) enthält, deren Lichtstrahlen (9a, 9b) jeweils einen spitzen Winkel ($\alpha$, $\beta$) zu einer Ebene (E) einschliesst, welche senkrecht zur Förderrichtung angeordnet ist, und mittels der Steuerungseinrichtung (14) auf der Grundlage der Fördergeschwindigkeit des Stückgutes (5) und eines ersten Signals, welches durch die Unterbrechung des ersten Lichtstrahls (9a) und eines zweiten Signals, welches durch die Unterbrechung des zweiten Lichtstrahls (9b) durch ein an den Lichtschranken (6a, 6b) vorbei geförderten Stückguts (5) generiert wird, eine Lageinformation zu einem dem Schiebeorgan (4, 24, 34, 44) zugewandten Bereich des Stückgutes (5) ermittelt wird.

9. Verfahren gemäss einem der Ansprüche 1 bis 8, **dadurch gekennzeichnet, dass** das Schiebeorgan (4, 24, 34, 44) bei Erreichen der Vorschubposition ($V_P$) angehalten wird, und das Schiebeorgan (4, 24, 34, 44) bis zum Eintreffen des auszusondernden Stückgutes (5) in der Vorschubposition ($V_P$) wartet.

10. Vorrichtung zum Erfassen und gezielten Aussondern von einzelnen Stückgütern (5) gemäss dem Verfahren nach einem der Ansprüche 1 bis 9,

   - mit einer Fördereinrichtung (10), enthaltend ein bewegbares, flächiges Förderorgan (4, 24, 34, 44) mit einer Förderfläche, auf welchem Stückgüter (5) hintereinander in einer Förderrichtung (F) gefördert werden können,
   - mit einer Schiebeeinrichtung, enthaltend ein Schiebeorgan (4, 24, 34, 44), welches zum Schieben eines Stückgutes (5) quer zur Förderrichtung (F) über das Förderorgan (2) in den Förderbereich der Stückgüter (5) hinein bewegbar ist,
   - mit einer Steuerungseinrichtung (14) zur Steuerung der Bewegung des Schiebeorgans (4, 24, 34, 44), und
   - mit einer Lagebestimmungseinrichtung zur Ermittlung von Lageinformationen zu den Stückgütern (5) auf dem Förderorgan (2), wobei die Lagebestimmungseinrichtung einen ersten und einen zweiten Messstrahlengang umfasst und eine orthogonale Projektion des ersten Messstrahlengangs und des zweiten Messstrahlengangs auf eine Ebene, in welcher die Förderfläche liegt, als eine erste und eine zweite Messstrahlengangprojektion bezeichnet wird, und wobei die Steuerungseinrichtung (14) dazu ausgelegt ist, aus den mittels der Lagebestimmungseinrichtung ermittelten Lageinformationen eine Vorschubposition ($V_P$) für das Schiebeorgan (4, 24, 34, 44) zu ermitteln und das Schiebeorgan (4, 24, 34, 44) vor dem Schieben des auszusondernden Stückgutes (5) in die ermittelte Vorschubposition ($V_P$) zu bewegen,

   wobei ein Kreuzungspunkt der ersten Messstrahlengangprojektion und der zweiten Messstrahlengangprojektion ausserhalb der Förderfläche angeordnet ist.

11. Vorrichtung gemäss Anspruch 10, **dadurch gekennzeichnet, dass** die Lagebestimmungseinrichtung ein opto-elektronisches Messsystem mit mindestens einer opto-elektronischen Komponente (6a, 6b) zur Ermittlung von Lageinformationen zu Stückgütern (5) enthält.

12. Vorrichtung gemäss Anspruch 11, **dadurch gekennzeichnet, dass** die Lagebestimmungseinrichtung mindestens eine Lichtschranke (6a, 6b) enthält.

13. Vorrichtung gemäss Anspruch 12, **dadurch gekennzeichnet, dass** die Lagebestimmungseinrichtung zwei Lichtschranken (6a, 6b) enthält, deren Lichtstrahlen (9a, 9b) mit einer Ebene (E) senkrecht zur Förderrichtung (F) jeweils einen spitzen Winkel ($\alpha$, $\beta$) einschliesst und die Lichtquellen (7a, 7b) der Lichtschranken (6a, 6b) übereinander oder nebeneinander angeordnet sind.

14. Vorrichtung gemäss einem der Ansprüche 10 bis 13, **dadurch gekennzeichnet, dass** die Vorrichtung eine Sensoreinrichtung (11) zum Ermitteln der Geschwindigkeit des Förderorgans (2) im Bereich der Schiebeeinrichtung enthält.

15. Vorrichtung gemäss einem der Ansprüche 10 bis 14, **dadurch gekennzeichnet, dass** die Schiebeeinrichtung eine über dem Förderorgan (2) angeordnete Führungsanordnung (22, 32, 42) enthält, mittels welcher das Schiebeorgan (4, 24, 34, 44) über das Förderorgan (2) führbar ist.

**Claims**

1. A method for detecting and for the targeted separating out of individual piece goods (5) which are conveyed one after the other in a conveying direction (F) on an extensive conveying element (2),
   wherein the piece good (5) to be separated out is displaced transversely to the conveying direction (F) by way of a push element (4, 24, 34, 44) by way of the push element (4, 24, 34, 44) being moved transversely to the conveying direction (F) into the conveying region of the piece goods (5),
   and wherein positional information concerning a region of the piece good (5) to be separated out said region facing the push element (4, 24, 34, 44), is determined by way of a position-determining device, and a forward position ($V_P$) is determined on account of the positional information, and
   wherein the forward position ($V_P$) is determined by a control device (14) in dependence on the positional information concerning the piece good (5) which is to be separated out, on the conveying element (2), and
   wherein before the pushing of the piece good (5) which is to be separated out, the push element (4, 24, 34, 44) is moved into the forward position ($V_P$) which lies above the conveying element (2) in the conveying region, and the piece good (5) which is to be separated out is pushed over the conveying element (2) by the push element (4, 24, 34, 44) by way of accelerating the push element (4, 24, 34, 44) out of the forward position ($V_P$) in a push direction (S), and
   wherein the position-determining device forms a first and a second measuring beam path, wherein an orthogonal projection of the first measuring beam path and of the second measuring beam path onto a plane, in which a conveying surface of the conveying element (2) lies, is indicated as a first and a second measuring beam path projection, wherein the first measuring beam path projection and the second measuring beam path projection intersect outside the conveying surface.

2. A method according to claim 1, **characterised in that** the position-determining device determines the positional information of the piece good (5) whilst using at least one predetermined characteristic of the piece good (5), wherein in particular a predetermined characteristic of the piece good (5) is that the piece good (5) has the shape of a cuboid.

3. A method according to claim 2, **characterised in that** the position-determining device determines the positional information of the piece good (5) whilst using the predetermined information that in a section of the conveying element (2) which extends from upstream of the position-determining device in the conveying direction (F) to downstream of the push element (4, 24, 34, 44), the region of the piece good (5) to be separated out, said region facing the push element (4, 24, 34, 44), is arranged essentially parallel to the conveying direction (F) in an orthogonal projection onto the conveying surface.

4. A method according to one of the claims 1 to 3, **characterised in that** the position-determining device determines a length of an orthogonal projection of the region of the piece good (5) to be separated out, said region facing the push element (4, 24, 34, 44), onto the conveying surface.

5. A method according to one of the claims 1 to 4, **characterised in that** on pushing the piece good (5) to be separated out, the push element (4, 24, 34, 44) engages the region of the piece good (5) to be separated out, said region facing the push element (4, 24, 34, 44), in an essentially central manner in an orthogonal projection onto the conveying surface, for the targeted separating out.

6. A method according to one of the claims 1 to 5, **characterised in that** the position-determining device forms a first and a second measuring beam path, by way of the position-determining device emitting a first and a second light beam.

7. A method according to one of the claims 1 to 6, **characterised in that** positional information concerning a region of the piece goods (5) which are not to be separated out, said region facing the push element (4, 24, 34, 44), is determined by way of the position-determining device, and a waiting position, into which the push element (4, 24, 34, 44) is moved back after the pushing of a piece good (5), is possibly determined on the basis of the positional information.

8. A method according to one of the claims 1 to 7, **characterised in that** the position-determining device comprises two light barriers (6a, 6b) whose light beams (9a, 9b) each enclose an acute angle ($\alpha$, $\beta$) to a plane (E) which is arranged perpendicularly to the conveying direction, and positional information concerning a region of the piece good (5) which faces the push element (4, 24, 34, 44) is determined by way of the control device (14) on the basis of the conveying speed of the piece good (5) and of a first signal which is generated by the interruption of the first light beam (9a) and of a second signal which is generated by the interruption of the second light beam (9b), due to a piece good (5) which is conveyed past the light barriers (6a, 6b).

9. A method according to one of the claims 1 to 8, **characterised in that** the push element (4, 24, 34, 44) is stopped on reaching the forward position ($V_P$), and the push element (4, 24, 34, 44) waits in the forward position ($V_P$) until the arrival of the piece good (5) which is to be separated out.

10. An appliance for detecting and the targeted separating out of individual piece goods (5) according to the method according to one of the claims 1 to 9,

   - with a conveying device (10), comprising a movable, extensive conveying element (2) with a conveying surface, on which piece goods (5) can be conveyed one after the other in a conveying direction (F),
   - with a pushing device, comprising a push element (4, 24, 34, 44) which is movable over the conveying element (2) into the conveying region of the piece goods (5) for pushing a piece good (5) transversely to the conveying direction (F),
   - with a control device (14) for the control of the movement of the push element (4, 24, 34, 44),
   - with a position-determining device for determining positional information concerning the piece goods (5) on the conveying element (2), wherein the position-determining device comprises a first and a second measuring beam path, and an orthogonal projection of the first measuring beam path and of the second measuring beam path onto a plane, in which the conveying surface lies, is indicated as a first and a second measuring beam path projection, and wherein the control device (14) is designed to determine a forward position ($V_P$) for the push element (4, 24, 34, 44) from the positional information which is determined by way of the position-determining device and to move the push element (4, 24, 34, 44) into the determined forward position ($V_P$) before the pushing of the piece good (5) to be separated out,

   wherein
   an intersection point of the first measuring beam path projection and of the second measuring beam path projection is arranged outside the conveying surface.

11. An appliance according to claim 10, **characterised in that** the position-determining device comprises an opto-electronic measuring system with at least one opto-electronic component (6a, 6b) for determining positional information concerning piece goods (5).

12. An appliance according to claim 11, **characterised in that** the position-determining device comprises at least one light barrier (6a, 6b).

13. An appliance according to claim 12, **characterised in that** the position-determining device comprises two light barriers (6a, 6b) whose light beams (9a, 9b) each enclose an acute angle ($\alpha$, $\beta$) with a plane (E) perpendicular to the conveying direction (F) and the light sources (7a, 7b) of the light barriers (6a, 6b) are arranged above one another or next to one another.

14. An appliance according to one of the claims 10 to 13, **characterised in that** the appliance comprises a sensor device (11) for determining the speed of the conveying element (2) in the region of the pushing device.

15. An appliance according to one of the claims 10 to 14, **characterised in that** the pushing device comprises a guide arrangement (22, 32, 42) which is arranged above the conveying element (2) and by way of which the push element (4, 24, 34, 44) can be guided over the conveying element (2).

**Revendications**

1. Procédé pour détecter et retirer de manière contrôlée des pièces individuelles de produit (5) transportées les uns derrière les autres sur un organe plat de transport (2) dans une direction de transport (F),
   la pièce de produit (5) à retirer étant déplacée transversalement par rapport à la direction de transport (F) au moyen d'un organe de poussée (4, 24, 34, 44) en déplaçant l'organe de poussée (4, 24, 34, 44) transversalement par rapport à la direction de transport (F) jusque dans la zone de transport des pièces de produit (5), une information de position concernant une partie, tournée vers l'organe de poussée (4, 24, 34, 44), de la pièce de produit (5) à retirer étant déterminée au moyen d'un dispositif de détermination de position et une position avancée (V_P) étant déterminée à partir de l'information de position, la position avancée (V_P) étant définie sur l'organe plat de transport (2) par un dispositif de commande (14) en fonction des informations de position concernant la pièce de produit (5) à retirer et l'organe de poussée (4, 24, 34, 44) étant déplacé dans la position avancée (V_P) au-dessus de l'organe plat de transport (2) dans la zone de transport avant de pousser la pièce de produit (5) à retirer et la pièce de produit (5) à retirer étant repoussée à travers l'organe plat de transport (2) par l'organe de poussée (4, 24, 34, 44) par accélération de l'organe de poussée (4, 24, 34, 44) dans une direction de poussée (S) partant de la position avancée (V_P) et le dispositif de détermination de position formant un premier et un deuxième parcours de rayons de mesure, une projection orthogonale du premier parcours de rayons de mesure et du deuxième parcours de rayons de mesure sur un plan dans lequel est située la surface de transport de l'organe de transport étant désignée respectivement première et deuxième projection du parcours de rayons de mesure, la première projection du parcours de rayons de mesure et la deuxième projection du parcours de rayons de mesure se croisant à l'extérieur de la surface de transport.

2. Procédé selon la revendication 1, **caractérisé en ce que** le dispositif de détermination de position détermine l'information de position de la pièce de produit (5) en recourant à au moins une propriété prédéterminée de la pièce de produit (5), une propriété prédéterminée de la pièce de produit (5) étant que la pièce de produit (5) présente la forme d'un parallélépipède.

3. Procédé selon la revendication 2, **caractérisé en ce que** le dispositif de détermination de position détermine l'information de position de la pièce de produit (5) en recourant à une information prédéterminée selon laquelle dans une partie du l'organe plat de transport (2) s'étendant depuis l'amont du dispositif de détermination de position dans la direction de transport (F) jusqu'à l'aval de l'organe de poussée (4, 24, 34, 44), la partie, tournée vers l'organe de poussée (4, 24, 34, 44), de la pièce de produit (5) à retirer est disposée essentiellement en parallèle à la direction de transport (F) dans une projection orthogonale sur la surface de transport.

4. Procédé selon l'une des revendications 1 à 3, **caractérisé en ce que** le dispositif de détermination de position détermine la longueur d'une projection orthogonale sur la surface de transport de la partie, tournée vers l'organe de poussée (4, 24, 34, 44), de la pièce de produit (5) à retirer.

5. Procédé selon l'une des revendications 1 à 4, **caractérisé en ce que** pour retirer de manière contrôlée, lorsque l'organe de poussée (4, 24, 34, 44) pousse la pièce de produit (5) à retirer, il saisit la partie, tournée vers l'organe de poussée (4, 24, 34, 44), de la pièce de produit (5) à retirer essentiellement au milieu dans une projection orthogonale sur la surface de transport.

6. Procédé selon l'une des revendications 1 à 5, **caractérisé en ce que** le dispositif de détermination de position forme un premier parcours de rayons de mesure et un deuxième parcours de rayons de mesure en faisant émettre un premier et un deuxième rayon lumineux par le dispositif de détermination de position.

7. Procédé selon l'une des revendications 1 à 6, **caractérisé en ce qu'**au moyen du dispositif de détermination de position, une information de position concernant une partie, tournée vers l'organe de poussée (4, 24, 34, 44), des pièces de produit (5) qui ne doivent pas être retirées est déterminée et **en ce que** sur la base de l'information de position, une position d'attente éventuelle dans laquelle l'organe de poussée (4, 24, 34, 44) est reculé après avoir poussé une pièce de produit (5) est déterminée.

8. Procédé selon l'une des revendications 1 à 7, **caractérisé en ce que** le dispositif de détermination de position contient deux barrières lumineuses (6a, 6b) dont les faisceaux lumineux (9a, 9b) forment un angle aigu ($\alpha$, $\beta$) respectif par rapport à un plan (E) qui s'étend perpendiculairement à la direction de transport et **en ce que** sur la base de la vitesse de transport de la pièce de produit (5), d'un premier signal formé par l'interruption du premier faisceau lumineux (9a) et d'un deuxième signal formé par l'interruption du deuxième faisceau lumineux (9b) par une pièce de produit (5) passant devant les barrières lumineuses (6a, 6b), une information de position concernant une partie, tournée vers l'organe de poussée (4, 24, 34, 44), de la pièce de produit (5) est déterminée.

9. Procédé selon l'une des revendications 1 à 8, **caractérisé en ce que** l'organe de poussée (4, 24, 34, 44) est arrêté lorsqu'il atteint la position avancée (V<sub>P</sub>) et **en ce que** l'organe de poussée (4, 24, 34, 44) attend en position avancée (V<sub>P</sub>) jusqu'à l'arrivée de la pièce de produit (5) à retirer par le dispositif de commande (14).

10. Ensemble pour détecter et retirer de manière contrôlée des pièces individuelles (5) en recourant au procédé selon l'une des revendications 1 à 9, l'ensemble présentant :

un dispositif de transport (10) contenant un organe plat de transport (4, 24, 34, 44) doté d'une surface de transport sur laquelle des pièces de produit (5) peuvent être transportées les unes derrière les autres dans une direction de transport (F),
un dispositif de poussée contenant un l'organe de poussée (4, 24, 34, 44) qui peut être amené dans la zone de transport des pièces de produit (5) pour repousser une pièce de produit (5) transversalement par rapport à la direction de transport (F) à travers le l'organe plat de transport (2),
un dispositif de commande (14) qui commande le déplacement de l'organe de poussée (4, 24, 34, 44) et
un dispositif de détermination de position qui détermine des informations de position concernant les pièces de produit (5) présentes sur l'organe plat de transport (2),
le dispositif de détermination de position formant un premier et un deuxième parcours de rayons de mesure, une projection orthogonale du premier parcours de rayons de mesure et du deuxième parcours de rayons de mesure sur un plan dans lequel est située la surface de transport de l'organe de transport étant désignée respectivement première et deuxième projection du parcours de rayons de mesure,
le dispositif de commande (14) étant conçu pour déterminer une position avancée (V<sub>P</sub>) de l'organe de poussée (4, 24, 34, 44) à partir des informations de position déterminées au moyen du dispositif de détermination de position et pour déplacer l'organe de poussée (4, 24, 34, 44) dans la position avancée (V<sub>P</sub>) qui a été déterminée, et ce avant de pousser la pièce de produit (5) à retirer,
la première projection du parcours de rayons de mesure et la deuxième projection du parcours de rayons de mesure se croisant à l'extérieur de la surface de transport.

11. Ensemble selon la revendication 10, **caractérisé en ce que** le dispositif de détermination de position contient un système opto-électronique de mesure présentant au moins un composant opto-électronique (6a, 6b) qui détermine des informations de position concernant les pièces de produit (5).

12. Ensemble selon la revendication 11, **caractérisé en ce que** le dispositif de détermination de position contient au moins une barrière lumineuse (6a, 6b).

13. Ensemble selon la revendication 12, **caractérisé en ce que** dispositif de détermination de position contient deux barrières lumineuses (6a, 6b) dont les faisceaux lumineux (9a, 9b) forment un angle aigu ($\alpha$, $\beta$) respectif par rapport à un plan (E) qui s'étend perpendiculairement à la direction de transport et **en ce que** les sources de lumière (7a, 7b) des barrières lumineuses (6a, 6b) sont disposées l'une au-dessus de l'autre ou l'une à côté de l'autre.

14. Ensemble selon les revendications 10 à 13, **caractérisé en ce que** l'ensemble contient un dispositif de capteur (11) qui détermine la vitesse de l'organe de transport (2) au niveau du dispositif de poussée.

15. Ensemble selon les revendications 10 à 14, **caractérisé en ce que** le dispositif de poussée contient un ensemble de guidage (22, 32, 42) disposé au-dessus de l'organe plat de transport (2) et au moyen duquel l'organe de poussée (4, 24, 34, 44) peut être déplacé à travers l'organe plat de transport (2).

Fig.1

Fig.2

Fig.3a

EP 3 180 280 B1

Fig.3b

Fig.4a

Fig.4b

# Fig.5a

W

12

5'

32

5

5

S

10

2

F

33  34

33  31

36

14

# Fig.5b

31

36

14

34

2

F

5

10

# Fig.5c

34'

34

B

12  5  10  2

# Fig.6

EP 3 180 280 B1

# Fig.7

# Fig.8

**Fig.9**

EP 3 180 280 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014110684 A1
- DE 19522217 C2
- DE 102008059433 A1
- DE 29812741 U1
- WO 9949277 A1
- WO 2005097638 A1